(19)

**Europäisches Patentamt**
**European Patent Office**
**Office européen des brevets**

(11)  **EP 3 268 725 B1**

(12)  # EUROPÄISCHE PATENTSCHRIFT

(45) Veröffentlichungstag und Bekanntmachung des Hinweises auf die Patenterteilung:
**28.08.2024   Patentblatt 2024/35**

(21) Anmeldenummer: **16716003.5**

(22) Anmeldetag: **05.02.2016**

(51) Internationale Patentklassifikation (IPC):
**G01N 21/64** (2006.01)   **G01J 3/44** (2006.01)
**B07C 5/342** (2006.01)   **B29B 17/02** (2006.01)
**G01J 3/18** (2006.01)

(52) Gemeinsame Patentklassifikation (CPC):
**G01N 21/6408; B07C 5/3427; B29B 17/02;**
**G01J 3/18; G01J 3/4406; G01N 21/643;**
B07C 2501/0054; B29B 2017/0203;
B29B 2017/0279; B29K 2995/0035;
G01N 2021/6417; Y02W 30/62

(86) Internationale Anmeldenummer:
**PCT/DE2016/200076**

(87) Internationale Veröffentlichungsnummer:
**WO 2016/124197 (11.08.2016 Gazette 2016/32)**

(54)  **VERFAHREN UND VORRICHTUNG ZUR IDENTIFIZIERUNG VON KUNSTSTOFFEN UND DEREN ADDITIVEN**

METHOD AND APPARATUS FOR IDENTIFYING PLASTICS AND ADDITIVES THEREIN

PROCÉDÉ ET DISPOSITIF PERMETTANT L'IDENTIFICATION DE MATIÈRES PLASTIQUES ET DE LEURS ADDITIFS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.02.2015   DE 102015001524**
**06.02.2015   DE 102015001525**
**06.02.2015   DE 102015001523**
**06.02.2015   DE 102015001522**

(43) Veröffentlichungstag der Anmeldung:
**17.01.2018   Patentblatt 2018/03**

(73) Patentinhaber: **Unisensor Sensorsysteme GmbH**
**76149 Karlsruhe (DE)**

(72) Erfinder:
• **KRIEG, Gunther**
**76227 Karlsruhe (DE)**
• **FEY, Dirk**
**67630 Neewiller (FR)**
• **BOHLEBER, Juergen**
**77815 Bühl (DE)**
• **LANGHALS, Heinz**
**85521 Ottobrunn (DE)**
• **SCHLUECKER, Thorben**
**85521 Ottobrunn (DE)**
• **ZGELA, Dominik**
**83376 Truchtlaching (DE)**

(74) Vertreter: **Ullrich & Naumann PartG mbB**
**Schneidmühlstrasse 21**
**69115 Heidelberg (DE)**

(56) Entgegenhaltungen:
**EP-A- 0 563 998      EP-A1- 1 052 499**
**DE-A- 4 231 477      DE-A1- 4 433 937**
**GB-A- 2 330 409      TW-B- I 468 653**
**US-A- 5 329 127      US-A1- 2011 232 398**
**US-A1- 2012 329 944      US-A1- 2013 270 457**

• **POTYRAILO R A AND WROCZYNSKI R J: "Spectroscopic and imaging approaches for evaluation of properties of one-dimensional arrays of formulated polymeric materials fabricated in a combinatorial microextruder system", REVIEW OF SCIENTIFIC INSTRUMENTS, AIP, MELVILLE, NY, US, vol. 76, no. 6, 2005, pages 62222 - 062222, XP012079448, ISSN: 0034-6748**

- BAUER D R: "Photo-physics of melamine-formaldehyde resins: Fluorescence and fluorescence lifetimes", POLYMER DEGRADATION AND STABILITY, BARKING, GB, vol. 19, no. 2, 1987, pages 97 - 112, XP022791798, ISSN: 0141-3910, [retrieved on 19870101], DOI: 10.1016/0141-3910(87)90069-3
- ÜN ILKER ET AL: "Syntheses, characterizations, thermal and photophysical properties of cyclophosphazenes containing adamantane units", INORGANICA CHIMICA ACTA, ELSEVIER BV, NL, vol. 399, 7 February 2013 (2013-02-07), pages 219 - 226, XP028524861, ISSN: 0020-1693, DOI: 10.1016/J.ICA.2013.01.028
- HEINZ LANGHALS ET AL: "High Performance Recycling of Polymers by Means of Their Fluorescence Lifetimes*", GREEN AND SUSTAINABLE CHEMISTRY, vol. 04, no. 03, August 2014 (2014-08-01), pages 144 - 150, XP055287985, ISSN: 2160-6951, DOI: 10.4236/gsc.2014.43019
- ANONYMOUS: "Fluoreszenzlebensdauer - Wikipedia", 24 July 2012 (2012-07-24), XP055288692, Retrieved from the Internet <URL:http://web.archive.org/web/20120724053431/http://de.wikipedia.org/wiki/Fluoreszenzlebensdauer> [retrieved on 20160714]
- EDINBURGH INSTRUMENTS LTD.: "Operating Instructions F900", 2004, XP055288367, Retrieved from the Internet <URL:http://www.tcd.ie/Physics/research/groups/1d-nanostructures/resources/equipment/NIRPL.pdf> [retrieved on 20160714]

## Beschreibung

Obwohl auf beliebigen Gebieten anwendbar, wird die vorliegende Erfindung in Bezug auf Recycling von Kunststoffen erläutert.

Das Recycling von Kunststoffen erfährt in letzter Zeit eine wachsende Bedeutung.

Kunststoffmüll hat bereits erhebliche Auswirkungen auf die Umwelt, sei es durch die Verschmutzung von Gewässern oder die immer weiter ansteigende Menge an Kunststoffmüll. Eine Lösung des Problems bietet das Kunststoff-Recycling, indem Altstoffe, also Kunststoffe, die in Produkten verarbeitet wurden und nicht mehr benötigt werden, in Wertstoffe, also in Stoffe, die für die erneute Verarbeitung in Produkten geeignet sind, umgewandelt werden. Hiermit können dann auch die für die Herstellung von Kunststoffen erforderlichen Ressourcen geschont werden.

Beispielsweise bei Kunststoffen in Form von Thermoplasten ist zwar eine Wiederverwendung über ein einfaches Aufschmelzen und Neuformen möglich, jedoch können diese nicht ohne Weiteres mit anderen Kunststoffen gemischt werden. Darüber hinaus ist für das Recycling von Kunststoffen deren Identifizierung wesentlich. Sind Kunststoffe chemisch ähnlich, wie beispielsweise bei Polyethylen PE, Low-Density-Polyethylen LDPE, High-Density-Polyethylen HDPE o.ä. ist dies aufwändig und schwierig.

Andere Kunststoffe, wie bspw. Silikone werden bisher nicht in größerem Maße recycelt. Dies liegt nicht nur daran, dass das Aufkommen von gebrauchtem Silikon im Verhältnis zu anderen Kunststoffen wesentlich kleiner ist, sondern auch daran, dass es nicht möglich ist, gemischte Silikone in Bezug auf die diversen Silikonarten aufzutrennen. Da aber teilweise Silikonen wertvolle Hilfsstoffe, wie z.B. Platin-Katalysatoren zugesetzt werden, ist deren gezielte Rückgewinnung sowohl wirtschaftlich als auch technologisch von großem Interesse.

Kunststoffe werden auch im Bereich von Lebensmitteln eingesetzt, beispielsweise in Form von PET-Flaschen, deren Vorteile gegenüber Glas mannigfaltig sind, beispielsweise Gewichtsersparnis, große Stabilität, Bruchsicherheit und Durchsichtigkeit. Eine Wiederverwendung oder ein Recycling derartiger Flaschen für Lebensmittelzwecke erfordert allerdings das sichere Aussortieren von problematischem Material, beispielsweise von Flaschen, in denen Mineralöle aufbewahrt worden sind. Derartige lipophile Substanzen lösen sich partiell in dem lipophilen Kunststoffmaterial der Flasche und stellen dadurch eine ernst zu nehmende Kontamination (bzw. allgemein ein Additiv) bezüglich einer Wiederverwendung der entsprechenden Flasche für Lebensmittel dar, weil die teilweise gelösten Substanzen in dem Kunststoff unter Umständen wieder aus dem Kunststoffmaterial heraus diffundieren und in das in der Flasche befindliche Lebensmittel übergehen können.

Neben den oben erwähnten Platin-Katalysatoren im Bereich der Silikone werden vielen Kunststoffen auch unterschiedliche Additive beigemischt. So werden beispielsweise Kunststoffen bestimmte Flammschutzmittel beigemischt, um ein Entzünden zu verhindern. Diese werden unter anderem im Bereich von Elektronikgeräten oder in Automobilen eingesetzt, um ein Entzünden zu verhindern bzw. zumindest zu verlangsamen oder zu hemmen. Aufgrund deren teilweisen Persistenz und Tendenz zur Bioakkumulation werden diese mehr und mehr durch andere unproblematischer Flammschutzmittel verdrängt, letztlich finden sich diese aber immer noch in Altgeräten und sind deshalb zumindest beim Recycling zu beachten.

Zur Detektion und Identifizierung von Kunststoffen sind verschiedene optische Verfahren bekannt geworden, beispielsweise aus der DE 10 2012 012 772.3 oder der US 2005/0095715. Weitere bekannte Verfahren sind beispielsweise aus der Nicht-Patentliteratur Heinz Langhals et al. "High Performance Recycling of Polymers by Means of Their Fluorescence Lifetimes", GREEN AND SUSTAINABLE CHEMISTRY, Bd. 04, Nr. 03, (2014-08) sowie aus der GB 2 330 409 A, DE 42 31 477 A1, US 5,329,127 A, EP 0 563 998 A1, US 2011/232398 A1, DE 44 33 937 A1; TW I 468 653 B, EP 1 052 499 A1 und der US 2013/270457 A1 bekannt geworden.

Problematisch hierbei ist jedoch, dass diese Verfahren, insbesondere bei chemisch ähnlichen Kunststoffen nicht hinreichend genau sind. Ein weiteres Problem ist, dass hier Marker für den Kunststoff für dessen Identifizierung vorausgesetzt werden, was jedoch unpraktikabel bzw. äußerst aufwendig ist.

Eine Aufgabe der Erfindung ist es daher, ein Verfahren und eine Vorrichtung anzugeben, die schnell und sicher Kunststoffe identifiziert und/oder deren Additive. Eine weitere Aufgabe der vorliegenden Erfindung ist es, insbesondere chemisch ähnliche Kunststoffe zuverlässig zu unterscheiden. Darüber hinaus ist es eine Aufgabe der vorliegenden Erfindung ein Verfahren und eine Vorrichtung anzugeben, die einfach zu implementieren sind bzw. ausgeführt werden können. Eine weitere Aufgabe der vorliegenden Erfindung ist es, ein alternatives Verfahren und alternative Vorrichtung zur Identifizierung von Kunststoffen und/oder deren Additive anzugeben.

Die vorliegende Erfindung löst die vorstehenden Aufgaben mit einem Verfahren gemäß Anspruch 1.

Die vorliegende Erfindung löst die vorstehenden Aufgaben ebenfalls mit einer Vorrichtung gemäß Anspruch 12.

Darüber hinaus löst die vorliegende Erfindung die vorstehenden Aufgaben durch eine Verwendung gemäß Anspruch 15.

Einer der damit erzielten Vorteile ist, dass durch Verwendung der Fluoreszenzabklingzeit der Eigenfluoreszenz eine sehr hohe Detektionssicherheit ermöglicht wird. Ein weiterer Vorteil ist, dass eine einfache Implementierung bei gleichzeitig zuverlässiger Auswertung und damit auch eine zuverlässige Identifizierung ermöglicht wird. Ein weiterer Vorteil ist, dass auch chemisch ähnliche Kunststoffe zuverlässig unterschieden und identifiziert werden können. Darüber hinaus ist ein Vorteil, dass auch Nicht-Kunststoffe, wie Gummi, Holz oder ähnliches, identifiziert werden können und dann ggf. auch ausgeschleust werden können. Ein weiterer Vorteil ist, dass Flammschutzmittel, die Kunststoffen beigemischt werden, zuverlässig identifiziert werden können.

Mit anderen Worten wird durch die Vorrichtung und das Verfahren eine Identifikation von Kunststoffen und von Additiven des Kunststoffs ermöglicht. Es ist damit möglich sowohl Kunststoff als auch eines oder mehrere Additive zu bestimmen.

Unter dem Begriff "Kunststoff" sind insbesondere in den Ansprüchen, vorzugsweise in der Beschreibung jegliche Art von Polymer oder Polymeren zu verstehen, beispielsweise

- jegliche Art von Silikon oder Silikonpolymer, insbesondere Silikontectosilgranulat, Silikontectosilfolie, Silikondehesiv Sn, Silikondehesiv Pt, jegliche Art von Silikonschläuchen, etc.,
- jegliche Art von Polyethylen PE, wie beispielsweise LDPE, HDPE und UHDPE,
- Polymethylmetacrylat PMMA,
- Polystyrol PS,
- Polycarbonat PC,
- Polyethylenenterethalat PET.

Unter dem Begriff "Additiv" sind insbesondere in den Ansprüchen, vorzugsweise in der Beschreibung, jegliche gewollten oder ungewollten Zusätze zu Kunststoffen zu verstehen, insbesondere Flammschutzmittel, vorzugsweise halogenierte, insbesondere bromierte und/oder chlorierte Flammschutzmittel, beispielsweise umfassend

- polybromierter Diphenylether PDBE,
- polybromiertes Biphenyl PBB,
- decabromierter Diphenylether,
- pentabromierter Diphenylether,
- octabromierte Diphenylether,
- Hexabromcyclododecan,
- Tetrabrombisphenol A TBBP-A,
- Tetrabromphthalsäureanhydrid,
- bromierte Polystyrole,
- bromierte Phenole,
- reaktive Flammschutzmittel,
- Antimontrioxid,
- Antimonpentoxid,
- Ammoniumsulfat,
- etc.

Unter dem Begriff "gemessenes Signal" ist insbesondere in den Ansprüchen, vorzugsweise in der Beschreibung, eine Größe zu verstehen, die bspw. mittels eines Sensors detektiert wurde und vom Sensor ggf. in anderer Form für eine Weiterleitung oder -verarbeitung bereitgestellt wird. Unter dem Begriff "gemessenes Signal" ist sowohl das vom Sensor direkt erhaltene unveränderte Signal ("Rohsignal") als auch ein verändertes, weiterarbeitetes und/oder aufbereitetes Signal zu verstehen. Unter dem Begriff "Probe" ist insbesondere in den Ansprüchen, vorzugsweise in der Beschreibung, insbesondere die Gesamtheit des zu untersuchenden Materials, hier des Kunststoffs, beispielweise in Form von Flaschen, Flakes etc. und mit vorhandenen Additiven, zu verstehen.

Unter dem Begriff "Fluoreszenzabklingzeit" wird insbesondere in den Ansprüchen, vorzugsweise in der Beschreibung auch der Begriff "Fluoreszenzlebenszeit", "Fluoreszenzlebenszeitkonstante", "Fluoreszenzabklingzeitkonstante", o.ä. verstanden.

Unter den Begriffen "mono", "bi", "tri", usw. in Bezug auf eine Exponentialfunktion wird insbesondere in den Ansprüchen, vorzugsweise in der Beschreibung im allgemeinen eine Aufsummierung verschiedener Exponentialfunktionen mit unterschiedlichen Parametern verstanden, wobei die Begriffe "mono", "bi", "tri" usw. die jeweilige Anzahl der unterschiedlichen Exponentialfunktionen bezeichnet.

Unter dem Begriff "mono-exponentiell" wird insbesondere in den Ansprüchen, vorzugsweise in der Beschreibung im Allgemeinen beispielsweise eine Funktion f der Form

$$f = a_0 + a_1 \exp(t^* x + b)$$

mit $a_0$, $a_1$, x , t , $b \in \mathbb{R}$ verstanden.

Unter den Begriffen "mehrfach-exponentiell", "multi-exponentiell" oder "höher-exponentiell" wird insbesondere in den Ansprüchen, vorzugsweise in der Beschreibung "bi-exponentiell", und/oder "tri-exponentiell", etc. verstanden.

Unter dem Begriff "bi-exponentiell" wird insbesondere in den Ansprüchen, vorzugsweise in der Beschreibung im Allgemeinen beispielsweise eine Funktion f der Form

$$f = a_0 + a_1 \exp(t_1{}^{*}x+b_1) + a_2 \exp(t_2{}^{*}x+b_2)$$

mit $a_0$, $a_1$, x, $t_1$, $b_1$, $t_2$, $b_2$, $a_2 \in \mathbb{R}$

verstanden.

Unter dem Begriff "tri-exponentiell" wird insbesondere in den Ansprüchen, vorzugsweise in der Beschreibung im Allgemeinen beispielsweise eine Funktion f der Form

$$f = a_0 + a_1 \exp(t_1{}^{*}x+b_1) + a_2 \exp(t_2{}^{*}x+b_2) + a_3 \exp(t_3{}^{*}x+b_3)$$

mit $a_0$, $a_1$, x, $t_1$, $b_1$, $t_2$, $b_2$, $a_2$, $t_3$, $b_3$, $a_3 \in \mathbb{R}$ verstanden.

Weitere bevorzugte Ausführungsformen, Vorteile und Merkmale der Erfindung ergeben sich aus dem Folgenden oder werden durch dieses offenbart:

Vorteilhafterweise werden die mehrfach-exponentiellen Fluoreszenzabklingzeitkonstanten bestimmt und multi-exponentiell analysiert. Unter Berücksichtigung beispielsweise bi-exponentieller oder tri-exponentieller Fluoreszenzabklingzeitkonstanten ist es möglich, den Kunststoff und/oder dessen Additiv oder Additive einfacher und sicherer zu detektieren. Darüber hinaus können beispielsweise sogar spezielle Chargen, wie z.B. bei Silikon-Dehesiven oder auch spezielle Verarbeitungsformen zuverlässig identifiziert werden. Bei PET-Trinkflaschen zum Beispiel kann mittels bi-, tri- und höher-exponentiellen Fluoreszenzabklingzeitkonstanten der mit Ölen oder anderen lipophilen Stoffen, wie z.B. Otto-Kraftstoff, Diesel-Kraftstoff und Schmieröle als Additiv verunreinigte Kunststoff sowie dessen Additiv(e) ebenfalls zuverlässig identifiziert werden. Das gleiche gilt auch für Silikone und deren Additiv(e).

Zweckmäßigerweise wird der Kunststoff mit einer Markierung zu dessen Identifizierung versehen, die mittels des Lichts bestrahlt wird. Damit ist eine noch zuverlässigere Identifizierung von Kunststoffen und/oder deren Additiven möglich.

Vorteilhafterweise wird das Licht zumindest einer Wellenlänge mittels zumindest eines Lichtpulses bereitgestellt. Mittels Lichtpulsen ist eine zuverlässige Anregung und gleichzeitig spätere Detektion des reemittierten Lichts möglich.

Vorteilhafterweise werden die Lichtpulse mittels einer Halbleiterlichtquelle, insbesondere in Form einer Laserdiode oder einer Leuchtdiode, enthaltend Galliumnitrid, erzeugt. Dies ermöglicht eine kostengünstige und gleichzeitig einfache Bereitstellung von Lichtpulsen.

Zweckmäßigerweise wird das Licht mittels eines Lasers erzeugt. Auf diese Weise ist eine besonders definierte Anregung mit einer geringen spektralen Breite zur späteren Messung des reemittierten Lichts möglich. Letztlich wird damit eine zuverlässige der Bestimmung der Fluoreszenzlebenszeitkonstante ermöglicht.

Vorteilhafterweise wird das reemittierte Licht mittels eines oder mehrerer phasenempfindlicher Detektoren für die nachfolgende Analyse detektiert. Damit ist eine besonders zuverlässige Detektion des reemittierten Lichts möglich, insbesondere bei mehreren parallel arbeitenden phasenempfindlichen Detektoren. Weiterhin kann durch die Verwendung von phasenempfindlichen Detektoren der elektronische Aufwand für die Detektionseinheiten günstig gestaltet werden.

Zweckmäßigerweise wird ein gemessenes Signal des detektierten Lichts über zumindest eine bestimmte Zeitspanne zur Bestimmung der Fluoreszenzabklingzeitkonstante integriert und wird insbesondere ermittelt. Durch die Verwendung von integralen Messungen kann der elektronische Aufwand für die Detektionseinheiten weiter günstig gestaltet werden. Darüber hinaus wird eine zuverlässige Bestimmung der Fluoreszenzabklingzeitkonstante ermöglicht.

Vorteilhafterweise wird das gemessene Signal über mehrere, insbesondere nicht überlappende Zeitspannen, integriert. Dies erhöht wesentlich die Zuverlässigkeit der Bestimmung der Fluoreszenzabklingzeitkonstante.

Vorteilhafterweise wird das gemessene Signal über zwei nicht überlappende Zeitspannen getrennt integriert, wobei die integrierten Signale miteinander in Relation gebracht werden und anhand dieser Relation der Kunststoff und/oder zumindest eines von dessen Additiven identifiziert werden. Relation ist hier insbesondere im mathematischen Sinne zu verstehen und kann insbesondere durch eine Quotierung der beiden gemessenen integrierten Bestandteile der Fluoreszenzabklingzeitkonstante bestehen. Anhand des so erhaltenen Quotienten kann dieser beispielsweise mit entsprechend hinterlegten Referenzquotienten verglichen werden und so der Kunststoff und/oder dessen Additive bestimmt werden.

Vorteilhafterweise korrespondiert die zumindest eine Zeitspanne zu einer abfallenden Flanke des gemessenen Signals. Damit lässt sich auf einfache und gleichzeitig zuverlässige Weise ein Bereich zur Bestimmung der Fluoreszenzabklingzeitkonstante angeben, nämlich auf der fallenden Flanke des über der Zeit aufgetragenen gemessenen Signals.

Vorteilhafterweise wird die Lage von zumindest einer Zeitspanne vor und/oder nach einer üblichen Halbwertzeit einer Fluoreszenzlebenszeit gewählt. Dadurch kann das Signal-zu-Rausch-Verhältnis in erheblichem Maße verbessert werden, da das reemittierte Licht der gemessenen Probe des Kunststoffs effektiver bzw. effizienter genutzt werden kann.

Zweckmäßigerweise beträgt zumindest eine Zeitspanne zwischen 1ms und 15s, insbesondere zwischen 7,5s und 12,5s, vorzugsweise 10s. Damit lässt sich in besonders flexibler Weise die jeweils zu messende Zeitspanne an die erforderliche Genauigkeit und/oder die konkrete Messsituation anpassen.

Vorteilhafterweise ist die Fluoreszenzabklingzeitkonstante des zu detektierenden Kunststoffs und/oder dessen Additivs oder Additiven grob bekannt und die Dauer der Lichtpulse wird kleiner als die bekannte Fluoreszenzabklingzeitkonstante gewählt, insbesondere mindestens um den Faktor 5, vorzugsweise mindestens um den Faktor 10. Damit lässt sich auf besonders zuverlässige Weise anhand des reemittierten Lichts die Fluoreszenzabklingzeitkonstante bestimmen, da der anregende Lichtpuls im Wesentlichen nicht die Messung des reemittierten Lichts stört.

Zweckmäßigerweise beträgt die Dauer der Lichtimpulse weniger als 1ms, vorzugsweise weniger als 100ns, insbesondere weniger als 10ns, vorzugsweise zwischen 5ns und 10ns. Damit lässt sich erreichen, dass die Dauer des Anregungspulses erheblich kleiner als die Fluoreszenzlebensdauer gewählt werden kann. Derartige Licht-Pulse können beispielsweise auf effiziente Weise mit Halbleiterlasern erzeugt werden.

Vorteilhafterweise liegt die zumindest eine Wellenlänge im Bereich zwischen 200nm und 600nm, insbesondere zwischen 250nm und 300nm, zwischen 375nm und 450nm und zwischen 520nm und 540nm, vorzugsweise zwischen 260nm und 270nm, zwischen 400nm und 410nm sowie zwischen 530nm und 535nm. Mittels der zumindest einen Wellenlänge in diesem Bereich kann beispielsweise eine Probe des Kunststoffs mit UV-Licht und/oder visuellem Licht bestrahlt werden, was eine zuverlässige Detektion des reemittierten Lichts nicht nur in Bezug auf die Bestimmung der Fluoreszenzabklingzeitkonstante ermöglicht, sondern auch die Möglichkeit für eine weitere Analyse anhand eines weiteren Verfahrens eröffnet.

Vorteilhafterweise werden nachdem der Kunststoff und/oder dessen Additiv oder Additive identifiziert sind, mittels einer Sortiereinrichtung die identifizierten Kunststoffe zum Recyceln getrennt. Damit wird auf einfache und zuverlässige Weise eine Separierung von Kunststoffen mit oder ohne Additive ermöglicht.

Vorteilhafterweise wird in einem Detektionsstrahlengang des reemittierten Lichts ein optisches Gitter angeordnet und die Fluoreszenzlebensdauerkonstante wird mittels des vom optischen Gitter gebeugten Lichts in nullter Ordnung bestimmt. Damit lassen sich auf einfache Weise neben der Bestimmung der Fluoreszenzabklingzeitkonstante auch beispielsweise mittels Licht in höherer Ordnung weitere Identifikationsverfahren durchführen.

Zweckmäßigerweise wird die Probe mehrfach hintereinander mit Licht der zumindest einen Wellenlänge bestrahlt und das entsprechend reemittierte Licht wird mehrfach gemessen und analysiert zur Bestimmung der Fluoreszenzlebenszeitkonstante. Damit wird die Zuverlässigkeit bei der Bestimmung der Fluoreszenzlebenszeitkonstante weiter erhöht, da verschiedene Messungen als Grundlage für die Analyse dienen.

Vorteilhafterweise werden die zumindest zwei Zeitspannen zu zeitlich verschiedenen, insbesondere aufeinander folgenden, Bestrahlungen der Probe mit Licht zugeordnet. Einer der damit erzielten Vorteile ist, dass damit die Anforderungen an die elektronischen Bauelemente für die Auswertung noch weiter verkleinert werden, da während Anregungen zu verschiedenen Zeiten gemessen wird.

Zweckmäßigerweise wird die Detektion des reemittierten Lichts durch die Bestrahlung der Probe mit Licht getriggert. Damit kann eine zeitverschobene und durch den Anregungslichtpuls getriggerte Messung vorgenommen werden, sodass eine Messung innerhalb eines Fluoreszenzabklingvorgangs ermöglicht wird, insbesondere bei periodischer Anregung.

Vorteilhafterweise ist die Lichtquelle eine gepulste Lichtquelle, vorzugsweise ein gepulster Laser. Mittels Lichtpulsen ist eine zuverlässige Anregung und gleichzeitig spätere Detektion des reemittierten Lichts möglich.

Vorteilhafterweise ist der Detektor phasenempfindlich ausgebildet. Damit ist eine besonders zuverlässige Detektion des reemittierten Lichts möglich, insbesondere bei mehreren parallel arbeitenden phasenempfindlichen Detektoren. Weiterhin kann durch die Verwendung von phasenempfindlichen Detektoren der elektronische Aufwand für die Detektionseinheiten günstig gestaltet werden.

Zweckmäßigerweise ist ein optisches Gitter in einem Detektionsstrahlengang des reemittierten Lichts angeordnet, wobei der Detektor derart angeordnet ist, dass mittels des Detektors die nullte Ordnung des vom optischen Gitter gebeugten Lichts detektierbar ist und wobei insbesondere ein Spektrometer angeordnet ist, mit welchem die höheren Ordnungen des vom optischen Gitter gebeugten Lichts für eine spektroskopische Auswertung detektierbar sind. Damit lässt sich auf einfache Weise neben der Bestimmung der Fluoreszenzabklingzeitkonstante auch beispielsweise das gesamte Fluoreszenzspektrum erzeugen und dann ggf. auch für eine zusätzliche Auswertung detektieren.

Zweckmäßigerweise ist eine Sortiereinrichtung angeordnet, die ausgebildet ist, um identifizierte Kunststoffe von anderen Kunststoffen zu trennen. Damit wird auf einfache und zuverlässige Weise eine Separierung und Trennung von Kunststoffen mit oder ohne Additive ermöglicht.

Weitere wichtige Merkmale und Vorteile der Erfindung ergeben sich aus den Unteransprüchen, aus den Zeichnungen, und aus dazugehöriger Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen, begrenzt nur durch den Umfang der angehängten Ansprüche.

Bevorzugte Ausführungen und Ausführungsformen der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile oder Elemente beziehen.

Dabei zeigt

Fig. 1     in schematischer Form eine Vorrichtung gemäß einer Ausführungsform der vorliegenden Erfindung;

Fig. 2     in schematischer Form Teile eines Verfahrens gemäß einer Ausführungsform der vorliegenden Erfindung;

Fig. 3     in schematischer Form Teile einer Vorrichtung gemäß einer Ausführungsform der vorliegenden Erfindung;

Fig. 4     Fluoreszenzabklingzeiten bei summierter Fluoreszenz von Polystyrol ohne und mit verschiedenen Flammschutzmitteln; und

Fig. 5     eine Übersicht über eine bi-exponentielle Auswertung von Fluoreszenzabklingzeiten verschiedener Materialien.

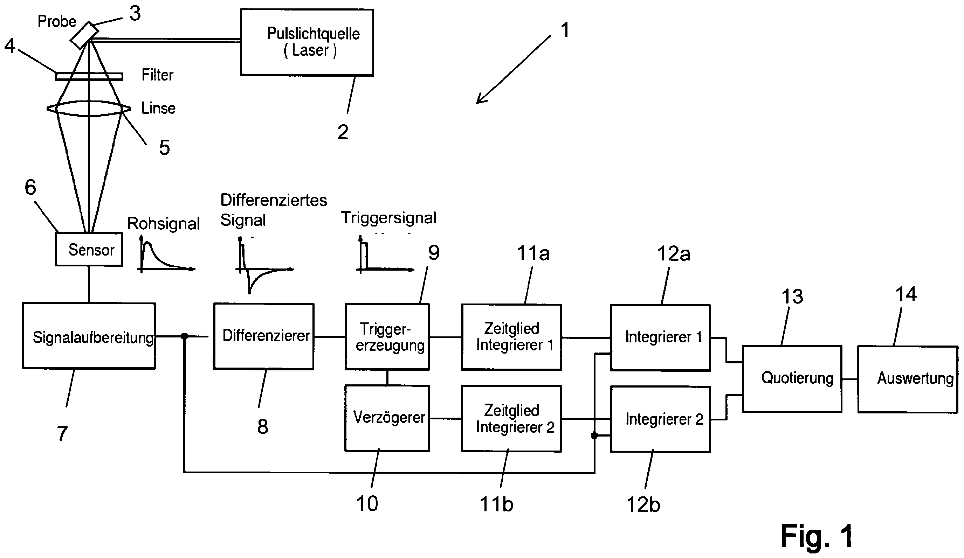

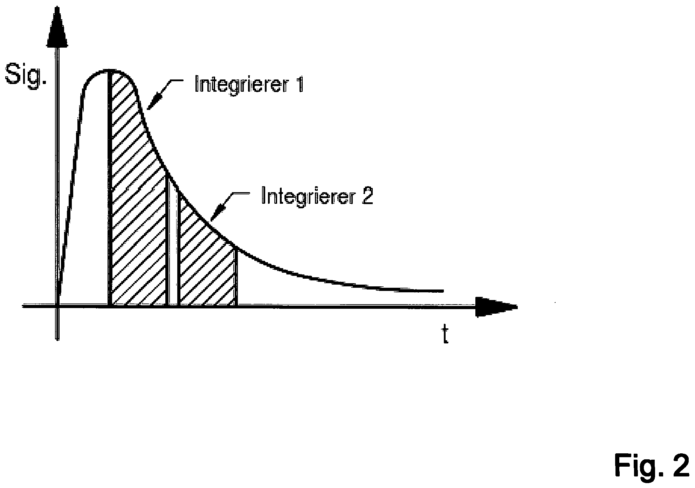

Fig. 1 zeigt in schematischer Form eine Vorrichtung gemäß einer Ausführungsform der vorliegenden Erfindung und Fig. 2 zeigt in schematischer Form Teile eines Verfahrens gemäß einer Ausführungsform der vorliegenden Erfindung.

In Fig. 1 ist eine Vorrichtung zur Identifizierung von Kunststoff und/oder ggf. eines oder mehrerer seiner Additive 1 gezeigt. Die Vorrichtung 1 umfasst dabei eine Pulslichtquelle 2, hier in Form eines Lasers, mit der eine Probe 3 des Kunststoffs, der identifiziert werden soll, bestrahlt wird. Das von der Probe 3 reemittierte Licht wird über einen Filter 4 sowie eine Linse 5 mittels eines Sensors 6 detektiert. Das von dem Sensor 6 erhaltene Rohsignal wird mittels einer Signalaufbereitung 7 aufbereitet und mittels eines Differenzierers 8 wird ebenfalls ein differenziertes Signal erzeugt. Es wird ebenfalls ein Trigger erzeugt mittels einer Triggererzeugung 9, welches dann einen ersten Zeitglied-Integrierer 12a und über einen Verzögerer 10 einen zweiten Zeitglied-Integrierer 12b auslöst.

Mittels der beiden Integrierer 12a und 12b wird das Signal (siehe Fig. 2) zu unterschiedlichen, nicht überlappenden Zeitspannen auf der abfallenden Flanke des aufbereiteten Signals aufintegriert. Mittels einer Quotierung 13 werden die beiden Werte, die von den beiden Integrierern 12a und 12b bereitgestellt werden, miteinander in Relation gesetzt, hier mittels Quotientenbildung und die so erhaltene Zahl einer Auswertung 14 zugeführt.

Die Auswertung 14 kann u.a. darin bestehen, dass in einem Speicher der Vorrichtung eine Vielzahl von Referenzkennzahlen für div. Kombinationen von Kunststoffen und deren Additiven hinterlegt worden ist und auf Basis eines Vergleichs zwischen diesen Kennzahlen und der ermittelten Kennzahl durch die Messung dann der Kunststoff und/oder dessen Additive identifiziert werden. Für die Hinterlegung derartiger Werte/Kennzahlen können beispielsweise mehrfach wiederholte Messungen desselben Kunststoffs mit denselben Additiven durchgeführt werden und diese dann beispielsweise mit einem Mittelwert und einer entsprechenden Abweichung im Speicher abgelegt werden. Im Falle einer nicht eindeutigen Identifizierung kann ein solches Ergebnis einem Benutzer entsprechend angezeigt werden und der Kunststoff kann, wenn das Verfahren beim Recycling eingesetzt wird, separat aussortiert werden und ggf. dann einem weiteren Identifizierungsverfahren zugeführt werden.

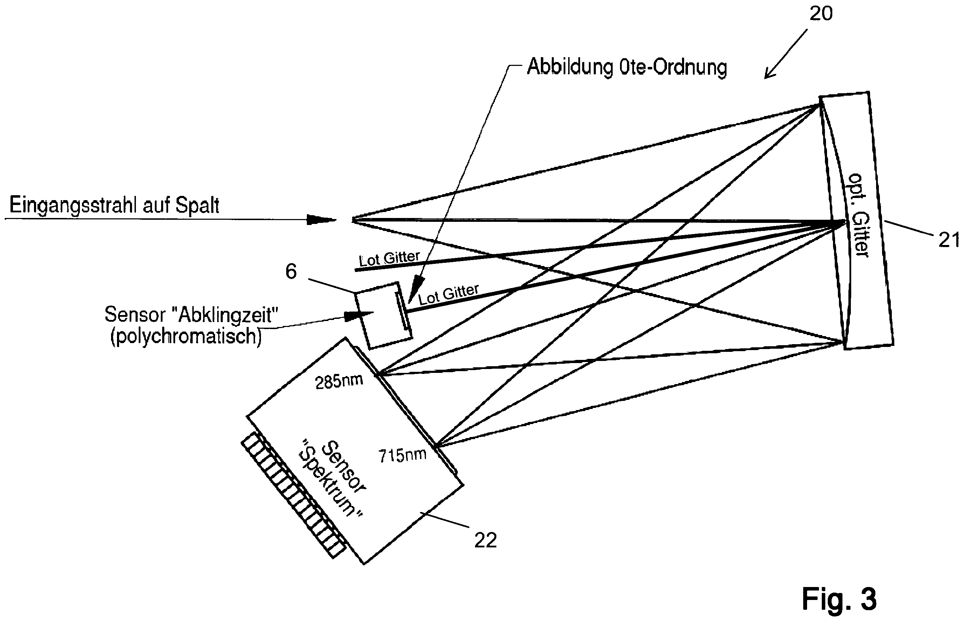

Fig. 3 zeigt in schematischer Form Teile einer Vorrichtung gemäß einer Ausführungsform der vorliegenden Erfindung.

In Fig. 3 ist ein Spektrometer mit Zusatz zur Messung der Fluoreszenzabklingzeit gezeigt. Dabei ist zusätzlich im Strahlengang, insbesondere zwischen Linse 5 und Sensor 6 in Fig. 1 ein optisches Gitter 21 angeordnet, welches das von der Linse 5 gebündelte Licht beugt. Der Sensor 6, der für das reemittierte Licht zur Detektion der Fluoreszenzabklingzeitkonstante vorgesehen ist, ist dabei in der 0. Ordnung des vom optischen Gitter 21 gebeugten Lichts angeordnet. Daneben ist ein weiterer Sensor 22 angeordnet, welcher zur Aufnahme der höheren Ordnungen des gebeugten Lichtes vom optischen Gitter 21 dient. Dieser ist hier insbesondere sensitiv im Bereich der Wellenlängen zwischen 250nm und 750nm, vorzugsweise zwischen 285nm und 715nm. Damit kann dann das vom Kunststoff und/oder dessen Additiven reemittierte Licht auch in diesem spektralen Bereich analysiert werden.

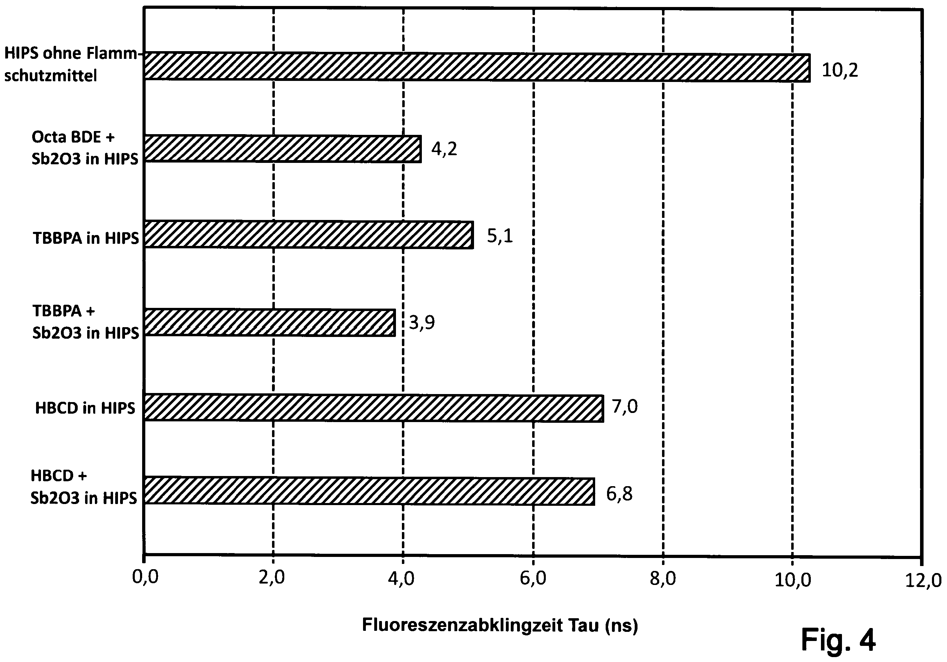

Fig. 4 zeigt Fluoreszenzabklingzeiten bei summierter Fluoreszenz von Polystyrol ohne und mit verschiedenen Flammschutzmitteln.

In Fig. 4 sind verschiede Fluoreszenzabklingzeiten bei summierter Fluoreszenz mit einer Anregung bei einer Wellenlänge von 266nm von schlagzähem Polystyrol, HIPS (High Impact Polystyrol) ohne Flammschutzmittel und mit verschiedenen Flammschutzmitteln gezeigt. Die Wellenlänge von 266nm kann bspw. mit einem NdYAG-Laser, welcher eine Grundwellenlänge von 1064nm aufweist durch Frequenzvervierfachung in bereits bekannter Weise erzeugt werden. Aus der Fig. 4 ergeben sich dabei signifikante Unterschiede hinsichtlich der Fluoreszenzabklingzeit bei verschiedenen Flammschutzmitteln. So beträgt die Fluoreszenzabklingzeit 10,2ns bei HIPS ohne Flammschutz, wo hingegen sie bei Zusatz der Flammschutzmittel CBBPA und $SB_2O_3$ um mehr als die Hälfte, hier nämlich 3,9ns kleiner ist.

Insgesamt ist aus Fig. 4 erkennbar, dass der Zusatz von Flammschutzmitteln in schlagzähem Polystyrol sich signifikant auf die Dauer der Fluoreszenzabklingzeit auswirkt und abhängig von den eingesetzten Flammschutzmitteln ist. Insbesondere wird die Abklingzeit durch im Kunststoff vorhandene Flammschutzmittel, wohl auf Grund von Quench-Effekten, herabgesetzt.

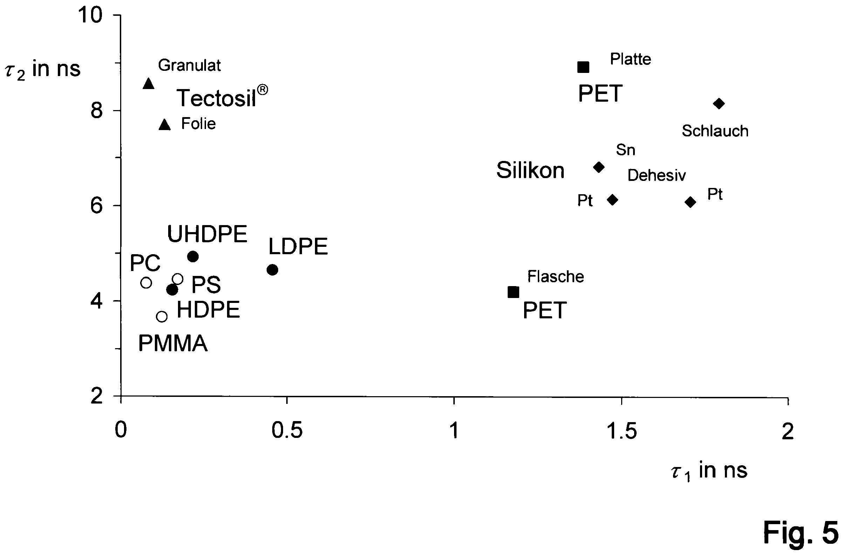

Fig. 5 zeigt eine Übersicht über eine bi-exponentielle Auswertung von Fluoreszenzabklingzeiten verschiedener Materialien.

Fig. 5 gibt die bi-exponentiellen Abklingzeiten von verschiedenen Kunststoffmaterialien wieder. Grundsätzlich kann dabei aber auch eine monoexponentielle Abklingzeitbestimmung bei bestimmten Kunststoffen bereits ausreichend sein:

| Kunststoff-Material | $\tau$ | $\tau_1$ | $\tau_2$ | Nr. |
|---|---|---|---|---|
| Polymethylmethacrylat (PMMA) | 0.841 | 0.124 | 3.669 | 1 |
| Polystyrol (PS) | 3.290 | 0.171 | 4.457 | 2 |
| Polycarbonat (PC) | 1.038 | 0.077 | 4.379 | 3 |
| Polyethylenterephthalat (PET) Flasche[a)] | 1.840 | 1.176 | 4.205 | 4 |
| Polyethylenterephthalat (PET) Platte | 4.466 | 1.387 | 8.933 | 5 |
| Polyethylen LDPE | 2.19 | 0.456 | 4.655 | 6 |
| Polyethylen HDPE | < 0.2 | 0.155 | 4.238 | 7 |
| Polyethylen UHDPE | 1.58 | 0.217 | 4.932 | 8 |
| Silikon Tectosil® Granulat | | 0.132 | 7.709 | 9 |
| Silikon Tectosil® Folie | | 0.084 | 8.572 | 10 |
| Silikon Dehesiv Sn | 3.078 | 1.432 | 6.825 | 11 |
| Silikon Dehesiv Pt (1) | 3.162 | 1.473 | 6.149 | 12 |
| Silikon Dehesiv Pt (2) | 3.114 | 1.707 | 6.106 | 13 |
| Silikonschlauch | 4.333 | 1.793 | 8.180 | 14 |
| a) PET Getränkeflasche eines bekannten Herstellers von Limonadengetränken. | | | | |

In obiger Tabelle sind die Fluoreszenzabklingkonstanten $\tau$ in ns von diversen technischen Polymeren gemittelt über 10 s Mess-Dauer gezeigt. Fluoreszenzanregung fand bei einer Wellenlänge von 403 nm statt, Mono-exponentielle Auswertung: $\tau$, bi-exponentielle Auswertung: $\tau_1$ und $\tau_2$.

Man erkennt aus Tab. 1, dass eine Zuordnung grundsätzlich bereits über die mono-exponentielle Abklingzeit $\tau$ gelingt (Nr. 1 bis 8); bei Silikonen ist dies bereits wegen der teilweise sehr kurzen Abklingzeit $\tau_1$ schwierig (Nr. 9 bis 10). Bei Berücksichtigung beider Abklingkonstanten ($\tau_1$ und $\tau_2$) ist eine Zuordnung wesentlich einfacherer und zuverlässiger und man kann darüber nicht nur den Kunststoff selbst zuordnen, sondern darüber hinaus auch spezielle Chargen, wie z.B. bei den Silikon-Dehesiven (Nr. 11 bis 13) oder auch spezielle Verarbeitungsformen (Nr. 4 und 5 und Nr. 9 und 10). Gut zu erkennen sind diese Zusammenhänge bei der zweidimensionalen Auftragung von $\tau_2$ gegen $\tau_1$, wie in Figur 5 gezeigt; man findet dann Cluster, wie z.B. für die diversen Dehesiv-Folien. Über eine solche Analyse zusammen mit der Zeitkonstante $\tau$ der mono-exponentiellen Auswertung gelingen dann auch schwierigere Zuordnungen, wie z.B. bei den diversen Polyethylenarten.

Die Fluoreszenzabklingzeiten wurden hierbei integrierend über eine Zeitdauer von 10 s bestimmt und ergaben, auch bei unterschiedlichen Kunststoffproben, sehr gut reproduzierbare Werte. Die Messzeit konnte problemlos auch auf 1ms verkürzt werden und ergab nur unwesentlich stärker streuende Messwerte.

Zur Fluoreszenzanregung können und wurden die üblichen Lichtquellen für kurze Lichtblitze verwendet werden, wie z.B. Gasentladungslampen (Blitzlampen), bevorzugt mit wasserstoffenthaltenden Gasfüllungen, oder Halbleiter-Laser, die vielfältig zur Verfügung stehen und unkompliziert betrieben werden können. Die Impulsdauer kann im Bereich von Nanosekunden liegen, und der zeitliche Verlauf des Fluoreszenzlichts als Antwort auf den Anregungsimpuls kann in bekannter Weise, z.B. durch Dekonvolution erhalten werden. Hierfür ist es nicht notwendig, aber vorteilhaft, wenn die Dauer des Anregungspulses erheblich kleiner als die Fluoreszenzlebensdauern ist; dies kann auf effiziente Weise mit Halbleiter-Lasern erreicht werden.

Die Fluoreszenzlebensdauerspektren wurden mit einem PicoQuant FluoTime 300 aufgenommen. Als Lichtquelle diente ein PicoQuant PicoHarp 300 gesteuerter PC-405-Laser mit 0.4 mW Leistung bei einer Pulsfrequenz von 20 MHz und einer Anregungswellenlänge von 403 nm.

Tabelle 2. Bestimmung der Detektionswellenlänge.

| Probe | $t_{Fluo1}$ | $t_{Fluo2}$ | Gewählte Detektionswellenlänge |
|---|---|---|---|
| PMMA | 2-3 ns | 4-100 ns | 440 nm |
| PS | 4-6 ns | 6-100 ns | 490 nm |
| PC | 2-3 ns | 4-100 ns | 440nm |
| Tectosil-Granulat | 2-3 ns | 4-100 ns | 480 nm |
| Tectosil-Film | 2-3 ns | 4-100 ns | 480 nm |
| PET | 2-5 ns | 8-100 ns | 450 nm |
| PE (HDPE) | 2-3 ns | 4-100 ns | 500 nm |

Die Detektionswellenlänge wurde bestimmt, indem ein lebensdauerabhängiges Fluoreszenzspektrum aufgenommen wurde. Dabei wurden bei den entsprechenden spektralen Wellenlängen die jeweiligen Fluoreszenzintensitäten der Fluoreszenzkomponenten mit vorwiegend kurzer ($t_{Fluo1}$), sowie mit vorwiegend langer Fluoreszenzlebensdauer ($t_{Fluo2}$), aufgenommen. Die gewählten Bereiche ergeben sich aus der Beschaffenheit der jeweils gemessenen Probe und sind nicht zwingend repräsentativ für die einzelnen, in der Probe enthaltenen, Fluorophore. Die Detektion wurde in der Folge bei der Wellenlänge vorgenommen, die dem Fluoreszenzmaximum der Komponenten mit langer Fluoreszenzlebensdauer entspricht (Tabelle 2).

Die Messdauer der Fluoreszenzlebensdauerbestimmung betrug 1,0 ms bzw. 10 s. Die so erhaltenen Abklingkurven wurden mit der Software FluoFit von Picoquant ausgewertet. Dazu wurde das Maximum der Messkurve ermittelt und dessen bezüglich zwei Abszissenabschnitte betrachtet. Zum einen jener zwischen dem Kurvenmaximum ($t_{max}$) und dem entsprechenden Zeitpunkt x ns nach der detektierten Maximalintensität ($t_{xns}$), resultierend in der Fluoreszenzlebensdauer $\tau_1$. Der zweite Abszissenabschnitt umfasst beginnend bei $t_{yns}$ einen Bereich von 40 ns (bis $t_{zns}$), aus welchem sich die Fluoreszenzlebensdauer $\tau_2$ ergibt (Tabelle 3). Die Fluoreszenzlebensdauern werden durch exponentielles Fitting (exponential tail fit) der jeweiligen Kurvenabschnitte gemäß der Formel $I_{rel} = A * e^{-t/\tau}$ erhalten.

Tabelle 3. Auswahl der Zeitbereiche in Abhängigkeit der Abklingkurve für biexponentielles Fitting.

| Probe | $t_{max}$-$t_{xns}$ | $t_{yns}$-$t_{zns}$ |
|---|---|---|
| PMMA | 0-0.5 ns | 3-43 ns |
| PS | 0-0.5 ns | 3-43 ns |
| PC | 0-0.5 ns | 3-43 ns |
| Tectosil-Granulat | 0-0.5 ns | 2-42 ns |
| Tectosil-Film | 0-0.5 ns | 2-42 ns |
| PET | 0-3 ns | 5-45 ns |
| PE | 0-3 ns | 3-43 ns |

Die Anregungsstruktur des Lasers wurde dabei aufgrund dessen geringer Halbwertsbreite nicht berücksichtigt. Die erhaltenen Werte stellen somit keine absoluten dar, sondern müssen gerätespezifisch angepasst werden. Im Falle der restlichen Silikone (Dehesiv, Schlauch) wurden zum Zweck der besseren Reproduzierbarkeit die dekonvolutierten Daten bi-exponentiell ausgewertet. Dadurch kann eine höhere Sicherheit bei der Identifikation gewährleistet werden.

Im Folgenden werden die Fluoreszenzabklingzeitkonstanten von PET-Trinkflaschen bestimmt, insbesondere PET-Wasserflaschen bzw. deren Schreddermaterial, um dieses von PET-Material unterscheiden zu können, das mit Ölen und anderen lipophilen Stoffen wie z.B. Autokraftstoff, Dieselkraftstoff und Schmierölen (Motoröl) verunreinigt wurde. Dieser Kontakt kann funktionsgemäß oder auch durch Zweckentfremdung, z.B. unerlaubtes Abfüllen von Kraftstoffen in Trinkflaschen, entstanden sein. Dabei ergaben sich die folgenden Fluoreszenzabklingzeiten:

Tabelle 4. Fluoreszenzabklingkonstanten $\tau$ in ns von PET-Materialien mit diversen Verunreinigungen gemittelt über 10 s Mess-Dauer. Fluoreszenzanregung bei 403 nm, Detektion bei 450 nm. Mono-exponentielle Auswertung: $\tau$; bi-exponentielle Auswertung: $\tau_1$ und $\tau_2$.

| PET-Material | $\tau$ | $\tau_1$ | $\tau_2$ | Nr. |
|---|---|---|---|---|
| Getränke-Flasche[a)] | 1.840 | 1.176 | 4.205 | 1 |
| Recycling-Flakes[b)] | 1.867 | 0.980 | 5.301 | 2 |
| Flasche, Kontakt mit Diesel[a,c)] | 0.971 | 0.937 | 3.479 | 3 |
| Flasche, Kontakt mit Diesel, gewaschen[a,c,d)] | 0.994 | 0.947 | 3.608 | 4 |
| Flasche, Kontakt mit Motoröl[a,c)] | 1.020 | 0.973 | 4.166 | 5 |
| Flasche, Kontakt mit Motoröl, gewaschen[a,c,d)] | 1.060 | 1.028 | 3.662 | 6 |
| PET-Platte | 4.466 | 1.387 | 8.933 | 7 |
| a) PET Getränkeflasche eines bekannten Herstellers von Limonadengetränken. b) Kommerzielle PET Recycling-Flakes. c) Nach einer Woche Kontakt mit Fremdstoffen. d) Gewaschenes Material; siehe experimenteller Teil. | | | | |

Man erkennt aus Tab. 4, dass für PET üblicher Getränkeflaschen Abklingkonstanten von gut 1,8 ns erhalten werden ($\tau$ von Nr. 1 und 2), die bei Kontamination mit Mineralölprodukten wie Dieselöl oder Motoröl überraschenderweise mit 1 ns erheblich kürzer werden (Nr. 3 und 5). Ein sorgfältiges Waschen ändert daran wenig (Nr. 4 und 6). Eine PET-Platte (Nr. 7) ergab erheblich höhere Fluoreszenzabklingzeiten. Bei Berücksichtigung bi-exponentieller Anteile ($\tau_1$ und $\tau_2$) findet man in analoger Weise hohe Werte $\tau_1$ für unbehandeltes Material (Nr. 1, 2 und 7), die bei Behandlung mit Mineralölprodukten deutlich absinken (Nr. 3 und 5) und auch nach sorgfältigem Waschen die ursprünglichen Werte nicht mehr erreichen (Nr. 4 und 6) ein völlig analoges Bild ergibt sich für die Abklingzeit $\tau_2$ und ermöglicht damit eine Zuordnung auf der Basis von zwei Größen. Die Verkürzung der mono-exponentiellen Abklingkonstante $\tau$ von kontaminiertem Material ist teilweise darauf zurückzuführen, dass der längerlebige bi-exponentielle Anteil, charakterisiert durch $\tau_2$, wesentlich kleiner ausfällt.

Die Fluoreszenzabklingzeiten wurden hier wieder integrierend über eine Zeitdauer von 10 s bestimmt und ergaben, auch bei unterschiedlichen Proben, sehr gut reproduzierbare Werte. Die Messzeit konnte problemlos auf 1 ms verkürzt werden und ergab nur unwesentlich stärker streuende Messwerte.

Die Detektionswellenlänge wurde hier bestimmt, indem ein lebensdauer-abhängiges Fluoreszenzspektrum von einem PET-Derivat aufgenommen wurde. Dabei wurden bei den entsprechenden spektralen Wellenlängen die jeweiligen Fluoreszenzintensitäten der Fluoreszenzkomponenten mit vorwiegend kurzer ($t_{Fluo1}$ = 2-5 ns), sowie mit vorwiegend langer Fluoreszenzlebensdauer ($t_{Fluo2}$ = 8-100 ns), aufgenommen. Die gewählten Bereiche ergeben sich aus der Beschaffenheit der jeweils gemessenen Probe und sind nicht zwingend repräsentativ für die einzelnen, in der Probe enthaltenen, Fluorophore. Die Detektion wurde in der Folge bei der Wellenlänge vorgenommen, die dem Fluoreszenzmaximum der Komponenten mit langer Fluoreszenzlebensdauer entspricht (450 nm).

Die Messdauer der Fluoreszenzlebensdauerbestimmung betrug 1,0 ms bzw. 10 s. Die so erhaltenen Abklingkurven wurden mit der Software FluoFit von Picoquant ausgewertet. Dazu wurde das Maximum der Messkurve ermittelt und dessen bezüglich zwei Abszissenabschnitte betrachtet. Zum einen jener zwischen dem Kurvenmaximum ($t_{max}$) und dem entsprechenden Zeitpunkt 3,0 ns nach der detektierten Maximalintensität ($t_{3ns}$), resultierend in der Fluoreszenzlebensdauer $\tau_1$. Der zweite Abszissenabschnitt umfasst beginnend bei einem Abszissenabschnitt 5 ns hinter dem Maximum liegend ($t_{5ns}$) einen Bereich von 40 ns (bis $t_{45ns}$), aus welchem sich die Fluoreszenzlebensdauer $\tau_2$ ergibt. Die Fluoreszenzlebensdauern werden durch exponentielles Fitting (exponential tail fit) der jeweiligen Kurvenabschnitte gemäß der Formel $I_{rel} = A * e^{-t/\tau}$ erhalten.

Die Anregungsstruktur des Lasers wurde dabei aufgrund dessen geringer Halbwertsbreite nicht berücksichtigt. Die erhaltenen Werte stellen somit keine absoluten dar, sondern müssen gerätespezifisch angepasst werden. Die beschriebene Methode erläutert jedoch die zuverlässige Unterscheidung der verschiedenen Proben und lässt sich auf andere experimentelle Anordnungen adaptieren.

Die Reinigung erfolgte dabei zuerst mit manuellem Abwischen mit Stofftüchern; bei kompakten PET-Teilen erfolgte ein Zerkleinern zu Flakes. Danach wurden die PET-Flakes in einer Mischung aus 3% wässriger NaOH-Lösung (100 mL) und 15% wässriger Natriumdodecylsulfat-Lösung (50 mL) unter Rühren 2 h bei 85°C gewaschen. Zuletzt wurden die Prüfkörper mit Stoffpapier, Luftdruck und dann 16 h bei 60°C getrocknet.

Bei Polyethylen wurden ebenfalls die mono- und bi-exponentiellen Fluoreszenzabklingzeiten bestimmt: Für das LDPE (Hochdruck-Polyethylen) wurde die längste Fluoreszenzabklingzeit von 2,19 ns bei monoexponentieller Auftragung gefunden, die sich so erheblich von der Abklingzeit der anderen Polyethylen-Arten unterscheidet, dass eine einfache Detektion ganz eindeutig möglich ist. Die Fluoreszenzabklingzeiten der Niederdruck-Polyethylenarten HDPE und UHDPE sind erheblich kürzer. Hier ist aber ebenfalls eine Unterscheidung möglich, und man findet für UHDPE 1,58 ns und schließlich für HDPE die kürzeste Abklingzeit von weniger als 0,2 ns; für das letztere Material kann wegen der sehr kurzen Abklingzeit ein weiteres unterstützendes Verfahren wünschenswert sein. Die Fluoreszenzabklingkurven der Polyethylene enthalten hohe bi-exponentielle Anteile, und man findet bei bi-exponentieller Auswertung der Kurven 0,456 ns und 4,655 ns für LDPE 0,155 ns und 4,238 ns für HDPE und 0,217 ns und 4,923 ns für UHPE; siehe Tabelle 5 unten. Unter Verwendung der bi-exponentiellen Anteile ist die Zuordnung der Polyethylene ganz wesentlich vereinfacht und erheblich sicherer.

Tabelle 5. Fluoreszenzabklingkonstanten $\tau$ in ns von diversen PE-Materialien gemittelt über 10 s Mess-Dauer. Fluoreszenzanregung bei 403 nm, Detektion bei 450 nm. Mono-exponentielle Auswertung: $\tau$, bi-exponentielle Auswertung: $\tau_1$ und $\tau_2$. In Klammern angegeben ist die Standard-Abweichung bei einer ungünstigeren 1 ms Integrationszeit und 10 unabhängigen Materialproben.

| PE-Material | $\tau$ | $\tau_1$ | $\tau_2$ | Nr. |
|---|---|---|---|---|
| LDPE | 2.19 | 0.456 ($\pm$0.039) | 4.655 ($\pm$0.93) | 1 |
| HDPE | < 0.2 | 0.155 ($\pm$0.013) | 4.238 ($\pm$0.77) | 2 |
| UHDPE | 1.58 | 0.217 ($\pm$0.022) | 4.923 ($\pm$0.91) | 3 |

Die Werte $\tau_1$ und $\tau_2$ in Tabelle 5 sind bei 10 s Integrationszeit bestimmt worden und sind als zuverlässige Mittelwerte zu betrachten. Zur Abschätzung der Auswirkung von Messfehlern sind die Standardabweichungen bei der ungünstigeren nur 1 ms langen Integrationszeit aus den Messungen von 10 unabhängigen Proben bestimmt worden. Auch unter Berücksichtigung der nun ungünstigen Randbedingungen ist eine eindeutige Identifizierung der Polymermaterialien möglich.

Die Detektionswellenlänge für PE wurde hier bestimmt, indem ein lebensdauer-abhängiges Fluoreszenzspektrum eines PE-Derivates (HDPE) aufgenommen wurde. Dabei wurden bei den entsprechenden spektralen Wellenlängen die jeweiligen Fluoreszenzintensitäten der Fluoreszenzkomponenten mit vorwiegend kurzer ($t_{Fluo1}$ = 2-3 ns), sowie mit vorwiegend langer Fluoreszenzlebensdauer ($t_{Fluo2}$ = 4-100 ns), aufgenommen. Die gewählten Bereiche ergeben sich aus der Beschaffenheit der jeweils gemessenen Probe und sind nicht zwingend repräsentativ für die einzelnen, in der Probe enthaltenen, Fluorophore. Die Detektion wurde in der Folge bei der Wellenlänge vorgenommen, die dem Fluoreszenzmaximum der Komponenten mit langer Fluoreszenzlebensdauer entspricht (500 nm).

Die Messdauer der Fluoreszenzlebensdauerbestimmung betrug wiederum 1,0 ms bzw. 10 s. Die so erhaltenen Abklingkurven wurden mit der Software FluoFit von Picoquant ausgewertet. Dazu wurde das Maximum der Messkurve ermittelt und dessen bezüglich zwei Abszissenabschnitte betrachtet. Zum einen jener zwischen dem Kurvenmaximum ($t_{max}$) und dem entsprechenden Zeitpunkt 3,0 ns nach der detektierten Maximalintensität ($t_{3ns}$), resultierend in der Fluoreszenzlebensdauer $\tau_1$. Der zweite Abszissenabschnitt umfasst beginnend bei $t_{3ns}$ einen Bereich von 40 ns (bis $t_{43ns}$), aus welchem sich die Fluoreszenzlebensdauer $\tau_2$ ergibt. Die Fluoreszenzlebensdauern werden durch exponentielles Fitting (exponential tail fit) der jeweiligen Kurvenabschnitte gemäß der Formel $I_{rel} = A * e^{-t/\tau}$ erhalten.

Die Anregungsstruktur des Lasers wurde dabei aufgrund dessen geringer Halbwertsbreite wieder nicht berücksichtigt. Die erhaltenen Werte stellen somit keine absoluten dar, sondern müssen gerätespezifisch angepasst werden. Die beschriebene Methode erläutert jedoch die zuverlässige Unterscheidung der verschiedenen Proben und lässt sich auf andere experimentelle Anordnungen adaptieren.

Darüber hinaus wurden auch für diverse Silikonmaterialien die mono- und bi-exponentiellen Fluoreszenzabklingzeiten bestimmt.

Tabelle 6. Fluoreszenzabklingkonstanten $\tau$ in ns von diversen Silikon-Materialien gemittelt über 10 s Mess-Dauer. Fluoreszenzanregung bei 403 nm, Detektion bei 450 nm. Bi-exponentielle Auswertung: $\tau_1$ und $\tau_2$.

| Silikon-Material | $\tau$ | $\tau_1$ | $\tau_2$ | Nr. |
|---|---|---|---|---|
| Tectosil® Granulat | | 0.132 | 7.709 | 1 |
| Tectosil® Film | | 0.084 | 8.572 | 2 |
| Silikon Dehesiv Sn | 3.078 | 1.432 | 6.825 | 3 |
| Silikon Dehesiv Pt (1) | 3.162 | 1.473 | 6.149 | 4 |
| Silikon Dehesiv Pt (2) | 3.114 | 1.707 | 6.106 | 5 |
| Silikonschlauch | 4.333 | 1.793 | 8.180 | 6 |

Man erkennt aus Tab. 6, dass die Silikone über die zwei Abklingkonstanten ($\tau_1$ und $\tau_2$) eindeutig zugeordnet werden können. Es werden zwei Cluster erhalten, indem für das kommerzielle Silicon-Elastomer Tectosil® (Nr. 1 und 2) kurze Abklingkonstanten $\tau_1$ und längere für Dehesiv-Materialien (Nr. 3 bis 5) erhalten werden. Die Verarbeitung von Tectosil® hat einen kleineren, aber charakteristischen Einfluss (Nr. 1 und 2). Die Abklingkonstanten $\tau_2$ sind im Vergleich zu anderen Polymeren sehr lang und können für die Zuordnung zu Silikonen und auch für die Fein-Zuordnung herangezogen werden. Diese Größe lässt außerdem die Herstellung der Dehesiv-Materialien unterscheiden, indem eine längere Konstante bei Anwendung eines Zinn-Katalysators (Nr. 3) und eine kürzere bei Platin-Katalysatoren (Nr. 4 und 5) gefunden wird. Ein kommerziell erhältlicher Silikonschlauch (Nr. 6) entspricht in seinen Daten eher den Dehesiv-Materialien, kann aber deutlich von diesen unterschieden werden; Materialien diverser Hersteller und für diverse Verwendungszwecke können damit effizient unterschieden und auch eingeordnet werden. In Figur 5 ist dies zweidimensional dargestellt.

Die Fluoreszenzabklingzeiten wurden hier integrierend über eine Zeitdauer von 10s bestimmt und ergaben, auch bei unterschiedlichen Proben, sehr gut reproduzierbare Werte. Die Messzeit konnte problemlos auf 1 ms verkürzt werden und ergab nur unwesentlich stärker streuende Messwerte.

Die Fluoreszenzlebensdauerspektren wurden mit einem PicoQuant FluoTime 300 aufgenommen. Als Lichtquelle diente ein PicoQuant PicoHarp 300 gesteuerter PC-405-Laser mit 0.4 mW Leistung bei einer Pulsfrequenz von 20 MHz und einer Anregungswellenlänge von 403 nm.

Die Detektionswellenlänge wurde bestimmt, indem ein lebensdauerabhängiges Fluoreszenzspektrum von Tectosil (Granulat) aufgenommen wurde. Dabei wurden bei den entsprechenden spektralen Wellenlängen die jeweiligen Fluoreszenzintensitäten der Fluoreszenzkomponenten mit vorwiegend kurzer ($t_{Fluo1}$ = 2-3 ns), sowie mit vorwiegend langer Fluoreszenzlebensdauer ($t_{Fluo2}$ = 4-100 ns), aufgenommen. Die gewählten Bereiche ergeben sich aus der Beschaffenheit der jeweils gemessenen Probe und sind nicht zwingend repräsentativ für die einzelnen, in der Probe enthaltenen, Fluorophore. Die Detektion wurde in der Folge bei der Wellenlänge vorgenommen, die dem Fluoreszenzmaximum der Komponenten mit langer Fluoreszenzlebensdauer entspricht (480 nm).

Die Messdauer der Fluoreszenzlebensdauerbestimmung betrug 1,0 ms bzw. 10 s. Die so erhaltenen Abklingkurven wurden mit der Software FluoFit von Picoquant ausgewertet. Dazu wurde für Tectosil das Maximum der Messkurve ermittelt und dessen bezüglich zwei Abszissenabschnitte betrachtet. Zum einen jener zwischen dem Kurvenmaximum ($t_{max}$) und dem entsprechenden Zeitpunkt 0,5 ns nach der detektierten Maximalintensität ($t_{0,5ns}$), resultierend in der Fluoreszenzlebensdauer $\tau_1$. Der zweite Abszissenabschnitt umfasst beginnend bei einem Abszissenabschnitt 2 ns hinter dem Maximum liegend ($t_{2ns}$) einen Bereich von 40 ns (bis $t_{42ns}$), aus welchem sich die Fluoreszenzlebensdauer $\tau_2$ ergibt. Die Fluoreszenzlebensdauern werden durch exponentielles Fitting (exponential tail fit) der jeweiligen Kurvenabschnitte gemäß der Formel $I_{rel} = A * e^{-t/\tau}$ erhalten. Im Falle der restlichen Silicone wurden zum Zweck der besseren Reproduzierbarkeit die dekonvolutierten Daten bi-exponentiell ausgewertet. Dadurch kann eine höhere Sortiersicherheit gewährleistet werden.

Im Allgemeinen kann die Erkennung von Polymeren über die Fluoreszenzabklingkonstante zum Sortieren der Materialien für das Recycling von beispielsweise Thermoplasten verwendet werden, bei denen die Wiederverwendung einfach erfolgen kann. Darüber hinaus ist es auch bei Kunststoffen vorteilhafterweise anwendbar, die chemisch aufbereitet werden sollen, wie z.B. bei der Nutzung gebrauchter Thermodure, da es dann gelingt, den Prozessen ein einheitliches Ausgangsmaterial zuzuführen, mit dem diese dann stabiler betrieben werden können. Hier können auch gezielt Wertstoffe zurückgewonnen werden, wie z.B. Platinkatalysatoren, wenn sie bei bestimmten Prozessen eingesetzt werden, weil deren Produkte dann erkannt werden. Schließlich kann das Verfahren auch außerhalb des Recyclings eingesetzt werden, um Kunststoffe optisch zu erkennten, wie z.B. bei der Produktkontrolle, insbesondere bei hochwertigen Endprodukten, bei denen diverse Ausgangsmaterialien zusammengeführt werden.

Für die Bestimmung der Fluoreszenzabklingzeiten ist es nicht erforderlich, den ganzen Exponentialverlauf zu erfassen, sondern es reichen zwei bzw. drei punktförmige oder auch integrierende Intensitätsmessungen (Kumulation - Summation - der Einzelmessungen jeweils über eine definierte Dauer) zu unterschiedlichen Zeiten aus. Bei bi-exponentiellem Verlauf sind drei Intensitätsmessungen erforderlich. Grundsätzlich sind auch weitere Messungen möglich. Damit kann die Genauigkeit weiter verbessert werden.

Die Integration über jeweils eine definierte Zeitspanne, zweckmäßigerweise erfolgen die Messungen vor der ersten Halbwertzeit und Messungen nach der ersten Halbwertzeit, ist dabei von besonderem Vorteil, weil dadurch das Signal-zu-Rausch-Verhältnis in erheblichem Maße verbessert wird (das Fluoreszenzlicht der Probe wird effizienter genutzt). Geht man von üblichen Fluoreszenzabklingzeiten von etwa 5 ns aus, dann können die Messvorgänge in Abständen von ein bis zwei Nanosekunden mit Integrationszeiten von ebenfalls etwa ein bis zwei Nanosekunden erfolgen. Messungen mit einer solchen zeitlichen Auflösung stellen elektronisch kein Problem dar. Der Messvorgang kann weiter vereinfacht werden, wenn die Kunststoff-Probe nicht nur einmal, sondern periodisch optisch angeregt wird. Es kann davon ausgegangen werden, dass nach etwa zehn Halbwertszeiten die optische Anregung so weit abgeklungen ist, dass eine erneute Anregung ungestört erfolgen kann; geht man von einem ungünstigen Fall mit 10 ns Fluoreszenzabklingzeit aus, ist dies nach etwa 70 ns erreicht. Man kann die Kunststoff-Probe daher periodisch mit einer Pulsfolge von 70 ns optisch anregen, also mit einer Repetierfrequenz von etwa 15 MHz. Die zwei Messungen für die Bestimmung der Fluoreszenzabklingzeiten können zeitverschoben bei insbesondere aufeinanderfolgenden Pulsen vorgenommen werden, und die Anforderungen an die elektronischen Bauelemente für die Auswertung werden dadurch noch weiter verkleinert.

Die Messung kann vorteilhafterweise innerhalb eines Fluoreszenzabklingvorgangs erfolgen, indem die Detektion der erforderlichen integrierten Signale bei periodischer Anregung zeitverschoben und durch den Anregungspuls getriggert vorgenommen wird; hier kann eine Auftrennung beispielsweise mit mehreren parallel arbeitenden phasenempfindlichen Detektoren (PSD) erfolgen, über die, über unterschiedliche Zeitbereiche der Abklingkurve integrierend, die Intensitäten gemessen werden. Hierbei ist es nicht erforderlich, die absolute Abklingzeit zu bestimmen: Es können hier auch gerätespezifische Rohdaten verwendet werden, solange diese hinreichend reproduzierbar sind; bei allen hier verwendeten Geräten hat sich eine ausgezeichnete Reproduzierbarkeit der Messwerte auch als Rohdaten (z.B. nicht durch Dekonvolution korrigiert) ergeben. Durch die unproblematische Verwendung auch von Rohdaten wird das Verfahren noch erheblich weiter vereinfacht.

Unter der Annahme, dass ein Recycling-Flake in ungünstigen Fällen maximal 10 mm groß ist und man zur Sicherheit 20 mm Platz zwischen zwei Flakes lässt, dann stünden bei 15 MHz Pulsfolge und einer Vorschubgeschwindigkeit von 140 m/s (man sollte aus technologischen Gründen deutlich unter der Schallgeschwindigkeit bleiben) mehr als 1000 Anregungspulse pro Flake zur Verfügung. Wenn man diese mittelt, kann man das Signal-zu-Rausch-Verhältnis erheblich verbessern und damit die Detektionssicherheit noch weiter erhöhen. Bei einer Masse von 25 mg für ein Recycling-Flake (der Wert wurde durch Mittelung von Flakes aus handelsüblichem technischem Recycling Material erhalten), kann man beispielsweise mit einer Sortierlinie dann problemlos eine halbe Tonne Material pro Stunde sortieren. In vielen Fällen ist eine so hohe Sortierleistung nicht erforderlich; bei kleineren Sortierleistungen sind die Anforderungen an Elektronik und Mechanik erheblich niedriger.

Unter Verwendung der Fluoreszenzabklingzeit der Eigenfluoreszenz, mono- und/ bi-, tri- oder höher-exponentiell ausgewertet, lassen sich Kunststoffe und deren Chargen eindeutig identifizieren und auf diesem Weg sortenrein für Recycling-Zwecke maschinell sortieren. Dies betrifft sämtliche makromolekularen Stoffe, die damit einer Wiederverwendung zugeführt werden können. Wegen der hohen Geschwindigkeit des Erkennungsvorgangs sind Möglichkeiten für Sortieranlagen mit großem Materialdurchsatz eröffnet. Durch die Verwendung von phasenempfindlichen Detektoren und integralen Messungen kann der elektronische Aufwand für Detektionseinheiten günstig gestaltet werden. Schließlich lässt sich das Verfahren zur Erkennung von makromolekularen Stoffen nicht nur zum Recycling einsetzen, sondern auch für Anwendungen, wie z.B. der Produkt-Kontrolle.

Unter Verwendung der Fluoreszenzabklingzeit der Eigenfluoreszenz, mono- und bi-, tri- und/oder höher-exponentiell ausgewertet, lassen sich PET-Materialien bezüglich Kontaminationen durch ihre vorhergehende Verwendung eindeutig identifizieren und auf diesem Weg sortenrein maschinell sortieren; dies ist insbesondere für die Unterscheidung von mit Mineralölprodukten kontaminiertem PET-Material von nicht kontaminiertem Material, u.a. für die Verwendung im Bereich der Lebensmittelindustrie, von Bedeutung.

Unter Verwendung der Fluoreszenzabklingzeit der Eigenfluoreszenz, insbesondere bi-, tri- und/oder höher-exponentiell ausgewertet, lassen sich Silikon-Materialien zuordnen und unterscheiden, wie dies hier mit Silikon-Elastomeren und Dehesiv-Folien gezeigt ist. Eine verfeinerte Auswertung ermöglicht Rückschlüsse auf die Verarbeitung des jeweiligen Silikons zu. Die unterschiedlichen Katalysatoren für die Herstellung von Silikon-Dehesiv-Material spiegeln sich insbesondere in der $\tau_2$-Zeitkonstante wieder, über die Hilfsstoffe wie Platin-Katalysatoren effizient nachgewiesen und sortenrein zurückgewonnen werden können. Schließlich lässt sich das Verfahren auch zur Routine-Produktkontrolle einsetzen, da es problemlos automatisierbar ist.

Unter Verwendung der Fluoreszenzabklingzeit der Eigenfluoreszenz, mono- und bi-, tri- und/oder höher-exponentiell ausgewertet, lassen sich auch beispielsweise die PE-Materialien LDPE, HDPE und UHDPE eindeutig identifizieren und sind auf diesem Weg sortenrein sortierbar.

Zusammenfassend lassen sich mit Hilfe der Fluoreszenzabklingzeitkonstante Kunststoffe und deren Additive einfach und höchst zuverlässig unterscheiden.

Die Messung der Fluoreszenzlebensdauer - sowohl im Falle einer monoexponentiellen Auswertung als auch im Falle einer bi-, tri- oder noch höher exponentiellen Auswertung - ist auf einfache Weise möglich bei gleichzeitig hoher Zuverlässigkeit. Ein weiterer Vorteil ist, dass die Messung der Fluoreszenzlebenszeit einfach implementiert werden kann und so insbesondere beim Recycling großer Mengen von Kunststoffen eingesetzt werden kann: Die Messung der Fluoreszenzlebenszeit und deren Auswertung benötigt nur wenige Nanosekunden, so dass beispielsweise Kunststoffflakes zuverlässig, beispielsweise auf einem Förderband, mit dem Licht bestrahlt werden und das reemittierte Licht dann zur Messung der Fluoreszenzlebenszeit verwendet werden kann.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Vorrichtung lediglich zur Erörterung der beanspruchten Lehre dienen, diese jedoch nicht auf die Ausführungsbeispiele einschränken.

**Patentansprüche**

1. Verfahren zur Identifizierung von Kunststoffen und zumindest eines von deren Additiven, wobei

   zumindest eine Probe (3) eines reinen Kunststoffs und dessen ein oder mehreren Additiven in Form eines Flammschutzmittels und/oder lipophilen Stoffs mit Licht (2) zumindest einer Wellenlänge bestrahlt wird, zumindest ein Teil des von der Probe (3) reemittierten Lichts detektiert und analysiert wird, und wobei anhand des Resultats der Analyse der reine Kunststoff und zumindest eines von dessen Additiven in Form eines Flammschutzmittels oder lipophilen Stoffs identifiziert werden, wobei
   zumindest eine Fluoreszenzabklingzeitkonstante der Eigenfluoreszenz des Kunststoffs anhand des detektierten Lichts bestimmt wird und anhand der zumindest einen bestimmten Fluoreszenzabklingzeitkonstante der reine Kunststoff und zumindest eines von dessen Additiven in Form eines Flammschutzmittels oder lipophilen Stoffs identifiziert werden, wobei eine oder mehrere mehrfach exponentielle Fluoreszenzabklingzeitkonstanten bestimmt werden können und multi-exponentiell analysiert werden können, und wobei die ein oder mehreren Additive die Fluoreszenzabklingzeitkonstante der Eigenfluoreszenz des Kunststoffs in der Probe, verglichen mit der des reinen Kunststoffs, herabsetzen.

2. Verfahren gemäß Anspruch 1, **dadurch gekennzeichnet, dass** die Probe (3) mit einer Markierung zur Identifizierung versehen ist, die mittels des Lichts (2) bestrahlt wird.

3. Verfahren gemäß einem der Ansprüche 1-2, **dadurch gekennzeichnet, dass** das Licht (2) zumindest einer Wellenlänge mittels zumindest eines Lichtpulses bereitgestellt wird, vorzugsweise wobei die Lichtpulse mittels einer Halbleiterlichtquelle, insbesondere in Form einer Laserdiode oder einer Leuchtdiode enthaltend Galliumnitrid, erzeugt werden und wobei das Licht mittels eines Lasers (2) erzeugt werden kann und wobei wenn die Fluoreszenzabklingzeitkonstante des zu detektierenden Kunststoffs und dessen Additive bekannt ist, die Dauer der Lichtpulse kleiner als die bekannte Fluoreszenzabklingzeitkonstante, insbesondere mindestens um den Faktor 5, vorzugsweise mindestens um den Faktor 10, gewählt werden kann, vorzugsweise wobei die Dauer der Lichtimpulse weniger als 1ms, vorzugsweise weniger als 100ns, insbesondere weniger als 10ns, vorzugsweise zwischen 5ns und 10ns, beträgt.

4. Verfahren gemäß einem der Ansprüche 1-3, **dadurch gekennzeichnet, dass** das reemittierte Licht mittels eines oder mehrerer phasenempfindlicher Detektoren (6) für die nachfolgende Analyse detektiert wird.

5. Verfahren gemäß einem der Ansprüche 1-4, **dadurch gekennzeichnet, dass** ein gemessenes Signal des detektierten Lichts über zumindest eine bestimmte Zeitspanne zur Bestimmung der Fluoreszenzabklingzeitkonstante integriert wird, und insbesondere gemittelt wird, vorzugsweise wobei das gemessene Signal über mehrere, insbesondere nicht überlappende Zeitspannen integriert wird, insbesondere wobei das gemessene Signal über zwei nicht überlappende Zeitspannen getrennt integriert wird, wobei die integrierten Signale miteinander in Relation gebracht werden und anhand dieser Relation der Kunststoff und zumindest eines der Additive identifiziert werden.

**6.** Verfahren gemäß Anspruch 5, **dadurch gekennzeichnet, dass** die zumindest eine Zeitspanne zu einer abfallenden Flanke des gemessenen Signals korrespondiert, wobei die Lage von zumindest einer Zeitspanne vor und/oder nach einer Halbwertszeit einer Fluoreszenzlebenszeit gewählt werden kann und wobei zumindest eine Zeitspanne zwischen 1ms und 15s, insbesondere zwischen 7,5s und 12,5s, vorzugsweise 10s betragen kann.

**7.** Verfahren gemäß einem der Ansprüche 1-6, **dadurch gekennzeichnet, dass** die zumindest eine Wellenlänge im Bereich zwischen 200nm und 600nm gewählt wird, insbesondere zwischen 250nm und 300nm, zwischen 375nm und 450nm und zwischen 520nm und 540nm, vorzugsweise zwischen 260nm und 270nm, zwischen 400nm und 410nm sowie zwischen 530nm und 535nm.

**8.** Verfahren gemäß einem der Ansprüche 1-7, **dadurch gekennzeichnet, dass** im Kunststoff nachdem der Kunststoff und zumindest ein Additiv identifiziert sind, mittels einer Sortiereinrichtung die identifizierten Kunststoffe mit dem zumindest einen Additiv zum Recyclen getrennt werden.

**9.** Verfahren gemäß einem der Ansprüche 1-8, **dadurch gekennzeichnet, dass** in einem Detektionsstrahlengang des reemittierten Lichts ein optisches Gitter (21) angeordnet wird und dass mittels des Lichts in nullter Ordnung des vom optischen Gitter (21) gebeugten Lichts die Fluoreszenzabklingzeitkonstante bestimmt wird.

**10.** Verfahren gemäß Anspruch 5, **dadurch gekennzeichnet, dass** die Probe mehrfach hintereinander mit Licht der zumindest einen Wellenlänge bestrahlt wird und das entsprechende reemittierte Licht mehrfach zur Bestimmung der Fluoreszenzabklingzeitkonstante gemessen und analysiert wird, vorzugsweise wobei die zumindest zwei Zeitspannen zu zeitlich verschiedenen, insbesondere aufeinanderfolgenden, Bestrahlungen der Probe mit Licht zugeordnet werden.

**11.** Verfahren gemäß einem der Ansprüche 1-10, **dadurch gekennzeichnet, dass** die Detektion des reemittierten Lichts durch die Bestrahlung der Probe (3) mit Licht (2) getriggert wird.

**12.** Vorrichtung (1) zur Durchführung eines Verfahrens gemäß einem der Ansprüche 1-11, umfassend:

eine Lichtquelle (2) zum Bestrahlen zumindest der Probe (3) des reinen Kunststoffs und dessen zumindest einen Additivs in Form eines Flammschutzmittels und/ oder lipophilen Stoffs mit Licht zumindest einer Wellenlänge,
einen Detektor (6) zur Detektion zumindest eines Teils des von der Probe reemittierten Lichts umfassend die Eigenfluoreszenz des Kunststoffs in der Probe, und
eine Analyseeinheit, umfassend zumindest einen Prozessor zur Analyse des detektierten Lichts,
eine Identifikationseinheit zur Identifikation des reinen Kunststoffs und zumindest eines von dessen Additiven anhand des von der Analyseeinheit bereitgestellten Resultats der Analyse, wobei
die Analyseeinheit ausgebildet ist, eine Fluoreszenzabklingzeitkonstante der Eigenfluoreszenz des Kunststoffs in der Probe anhand des detektierten Lichts zu bestimmen und die Identifikationseinheit ausgebildet ist, anhand der zumindest einen bestimmten Fluoreszenzabklingzeitkonstante der Eigenfluoreszenz des Kunststoffs in der Probe den reinen Kunststoff und zumindest eines von dessen Additiven in Form des Flammschutzmittels oder des lipophilen Stoffs zu identifizieren, wobei die Lichtquelle eine gepulste Lichtquelle, vorzugsweise ein gepulster Laser, sein kann und/oder der Detektor phasenempfindlich ausgebildet sein kann, und wobei die ein oder mehreren Additive die Fluoreszenzabklingzeitkonstante der Eigenfluoreszenz des Kunststoffs in der Probe, verglichen mit der des reinen Kunststoffs, herabsetzen.

**13.** Vorrichtung gemäß Anspruch 12, **dadurch gekennzeichnet, dass** die Vorrichtung ein optisches Gitter in einem Detektionsstrahlengang des reemittierten Lichts umfasst, wobei der Detektor (6) derart angeordnet ist, sodass mittels des Detektors die nullte Ordnung des vom optischen Gitter (21) gebeugten Lichts detektierbar ist und insbesondere wobei ein Spektrometer angeordnet ist, mit welchem die höheren Ordnungen des vom optischen Gitter (21) gebeugten Lichts für eine spektroskopische Auswertung detektierbar wird.

**14.** Vorrichtung gemäß einem der Ansprüche 12-13, **dadurch gekennzeichnet, dass** die Vorrichtung eine Sortiereinrichtung umfasst, die ausgebildet ist, um identifizierte Kunststoffe von anderen Kunststoffen zu trennen.

**15.** Verwendung einer Bestimmung einer einfach- und/oder mehrfach exponentiellen Fluoreszenzabklingzeitkonstante der Eigenfluoreszenz eines Kunststoffs in einer Probe umfassend den Kunststoff und dessen ein oder mehrere Additiven in Form eines Flammschutzmittels und/oder lipophilen Stoffs, zur Identifizierung des Kunststoffs und zumindest eines Additivs in Form eines Flammschutzmittels oder lipophilen Stoffs in der Probe, wobei die ein oder mehreren Additive die Fluoreszenzabklingzeitkonstante der Eigenfluoreszenz des Kunststoffs in der Probe, verglichen mit der des reinen Kunststoffs, herabsetzen.

**Claims**

1. A method for identifying plastics and at least one of their additives, where

   at least one sample (3) of a pure plastic and of its one or more additives in the form of a flame retardant and/or a lipophilic substance is irradiated with light (2) of at least one wavelength,
   at least part of the light re-emitted by the sample (3) is detected and analyzed, and where the pure plastic and at least one of its additives in the form of a flame retardant or a lipophilic substance are identified based on the result of the analysis, wherein
   at least one fluorescence decay time constant of the intrinsic fluorescence of the plastic is determined based on the detected light, and that the plastic and at least one of its additives in the form of a flame-retardant or a lipophilic substance are identified based on the at least one determined fluorescence decay time constant, wherein one or more multiply exponential fluorescence decay time constants can be determined and analyzed multi-exponentially, and wherein the one or more additives reduce the fluorescence decay time constant of the intrinsic fluorescence of the plastic in the sample, compared to the one of the pure plastic.

2. The method as claimed in claim 1, **characterized in that** the sample (3) is provided with an identification marking which is irradiated by means of the light (2).

3. The method as claimed in either of claims 1-2, **characterized in that** the light (2) of at least one wave length is provided by means of at least one light pulse, preferably wherein the light pulses are generated by means of a semiconductor light source, more particularly in the form of a laser diode or a light-emitting diode containing gallium nitride, and wherein the light can be generated by means of a laser (2), and wherein if the fluorescence decay time constant of the plastic to be detected and its additive are known, the duration of the light pulse can be selected smaller than the known fluorescence decay time constant, especially at least by the factor 5, preferably at least by the factor 10, preferably wherein the duration of the light impulses is less than 1ms, preferably less than 100ns, especially less than 10ns, preferably between 5ns and 10ns.

4. The method as claimed in any of claims 1-3, **characterized in that** the re-emitted light is detected by means of one or more phase sensitive detectors (6) for the subsequent analysis.

5. The method as claimed in either of claims 1-4, **characterized in that** a measured signal of the detected light is integrated for the determination of the fluorescence decay time constant over at least a certain time span, preferably wherein the measured signal is integrated over a plurality of non-overlapping time spans, particularly wherein the measured signal is integrated separately over two non-overlapping time spans, wherein the integrated signals are set in relation to one another, based on which the plastic and at least one of the additives are identified.

6. The method as claimed in claim 5, **characterized in that** the at least one time span corresponds to the falling edge of the measured signal, wherein the position of at least one time span can be selected before and/or after the half-life of a fluorescence-lifetime, wherein at least one time span can be between 1ms and 15s, more particularly between 7,5s and 12,5s, preferably 10s .

7. The method as claimed in any of claims 1-6, **characterized in that** the at least one wavelength is selected in the range between 200nm and 600nm, more particularly between 250nm and 300nm, between 375nm and 450nm and between 520nm and 540nm, preferably between 260nm and 270 nm, between 400nm and 410 nm as well as between 530 nm and 535nm.

8. The method as claimed in any of claims 1-7, **characterized in that**, after the plastic and at least one additive have been identified, in the plastic the identified plastics with the at least one additive are separated for recycling by means of a sorting device.

9. The method as claimed in claim 1-8, **characterized in that** an optical grating (21) is arranged in the detecting beam path of the re-emitted light and **in that** the fluorescence decay time constant is determined by means of the light with zero order, diffracted by the optical grating (21).

10. The method as claimed in claim 5, **characterized in that** the sample is irradiated with light of at least one wavelength multiple times in a row and the corresponding re-emitted light is measured and analyzed repeatedly for the determination of the fluorescence decay time constant, preferably wherein the at least two time spans are assigned to the sample at different times of irradiation of the sample, particularly in succession.

11. The method as claimed in one of the claims 1-10, **characterized in that** the detection of the re-emitted light is triggered by the irradiation of the sample (3) with light (2).

12. Apparatus (1) for implementing a method as claimed in claims 1-11, including

a light source (2) for the irradiation of at least the sample (3) of the pure plastic and its at least one additive in the form of a flame-retardant and/or a lipophilic substance with light of at least one wavelength, a detector (6) for the detection of at least part of the re-emitted light of the sample, comprising the intrinsic fluorescence of the plastic in the sample, and an analytical unit, comprising at least one processor for the analysis of the detected light, an identification unit for the identification of the pure plastic and at least one of its additives based on the result of the analysis, provided by the analytical unit, characterized in thatwherein, the analytical unit is configured to determine a fluorescence decay time constant of the intrinsic fluorescence of the plastic in the sample based on the detected light, and wherein the identification unit is configured to identify the pure plastic and at least one of its additives in the form of the flame retardant or the lipophilic substance based on the at least one determined fluorescence decay time constant of the intrinsic fluorescence of the plastic in the sample, wherein the light source can be a pulsed light source, preferably a pulsed laser, and/or wherein the detector can be configured phase-sensitively, and wherein the one or more additives reduce the fluorescence decay time constant of the intrinsic fluorescence of the plastic in the sample, compared to the one of the pure plastic.

13. The apparatus as claimed in claim 12, **characterized in that** the device comprises an optical grating in a detection beam path of the re-emitted light, wherein the detector (6) is arranged in a way that the zeroth order of the light, diffracted by the optical grating (21), is detectable by means of the detector, and more particularly wherein a spectrometer is arranged, by means of which the higher orders of the light, diffracted by the optical grating (21), are detectable for spectroscopic evaluation.

14. The apparatus as claimed in either claims 12-13, **characterized in that** the device includes a sorting device, which is configured to separate identified plastics from other plastics.

15. Use of a determination of a singly and/or multiply exponential fluorescence decay time constant of the intrinsic fluorescence of a plastic in a sample, comprising the plastic as well as one or more of its additives in the form of a flame retardant and/or a lipophilic substance, for the identification of the plastic and at least one of its additives in the form of a flame retardant or a lipophilic substance in the sample, where the one or more additives reduce the fluorescence decay time constant of the intrinsic fluorescence of the plastic in the sample, compared to the one of the pure plastic.

**Revendications**

1. Procédé d'identification de matières plastique et d'au moins un de leurs additifs, dans lequel

au moins un échantillon (3) d'une matière plastique pure et d'un ou de plusieurs d'additifs, sous la forme d'un retardateur de flamme et/ou d'une substance lipophile, sont irradiés avec une lumière (2) d'au moins une longueur d'onde, au moins une partie de la lumière réémise par l'échantillon (3) est détectée et analysée et dans lequel, à l'aide du résultat de l'analyse, la matière plastique pure et au moins un de ses additifs, sous la forme d'un retardateur de flamme et/ou d'une substance lipophile, sont identifiés, dans lequel au moins une constante de temps de disparition de fluorescence de la fluorescence propre de la matière plastique est déterminée à l'aide de la lumière détectée et, à l'aide de l'au moins une constante de temps de disparition de fluorescence, la matière plastique pure ou au moins un de ses additifs, sous la forme d'un retardateur de flamme et/ou d'une substance lipophile, sont identifiés, dans lequel une ou plusieurs constantes de temps de disparition de fluorescence multi-exponentielles peuvent être déterminées et peuvent être analysée de manière multi-exponentielle et dans lequel le ou les additifs font diminuer la constante de temps de disparition de fluorescence de la fluorescence propre de la matière plastique dans l'échantillon, par rapport à celle de la matière plastique pure.

2. Procédé selon la revendication 1, **caractérisé en ce que** l'échantillon (3) est muni d'un marquage d'identification qui est irradié au moyen de la lumière (2).

3. Procédé selon l'une des revendications 1 à 2, **caractérisé en ce que** la lumière (2) d'au moins une longueur d'onde est mise à disposition au moyen d'au moins une impulsion lumineuse, de préférence dans lequel les impulsions lumineuses sont générées au moyen d'une source de lumière à semi-conducteurs, plus particulièrement sous la forme d'une diode laser ou d'une diode électroluminescente contenant du nitrure de gallium et dans lequel la lumière peut être générée au moyen d'un laser (2) et dans lequel, lorsque la constante de temps de disparition de la fluorescence de la matière plastique à détecter et de ses additifs est connue, la durée des impulsions lumineuses peut être choisie de façon à être inférieure à la constante de temps de disparition de la fluorescence connue, plus particulièrement d'au moins un facteur 5, de préférence d'au moins un facteur 10, de préférence dans lequel la durée des impulsions lumineuses est inférieure à 1 ms, de préférence inférieure à 100 ns, plus particulièrement inférieure à 10 ns, de préférence entre 5 ns et 10 ns.

4. Procédé selon l'une des revendications 1 à 3, **caractérisé en ce que** la lumière réémise est détectée au moyen d'un ou de plusieurs détecteurs photosensibles (6) pour une analyse ultérieure.

5. Procédé selon l'une des revendications 1 à 4, **caractérisé en ce qu'**un signal mesuré de la lumière détectée est intégré et, plus particulièrement, moyenné sur au moins une période déterminée pour la détermination de la constante de temps de disparition de la fluorescence, de préférence dans lequel le signal mesuré est intégré et, plus particulièrement moyenné sur plusieurs périodes, plus particulièrement qui ne se chevauchent pas, plus particulièrement dans lequel le signal mesuré est intégré séparément sur deux périodes qui ne se chevauchent pas, dans lequel les signaux intégrés sont mis en relation entre eux et, à l'aide de cette relation, la matière plastique et au moins un des additifs sont identifiés.

6. Procédé selon la revendication 5, **caractérisé en ce que** l'au moins une période correspond à un flanc descendant du signal mesuré, dans lequel la position d'au moins une période avant et/ou après un temps de demi-valeur d'une durée de vie de la fluorescence peut être choisie et dans lequel au moins une période peut être entre 1 ms et 15 s, plus particulièrement entre 7,5 s et 12,5 s, de préférence de 10 s.

7. Procédé selon l'une des revendications 1 à 6, **caractérisé en ce que** l'au moins une longueur d'onde est choisie dans la plage entre 200 nm et 600 nm, plus particulièrement entre 250 nm et 300 nm, entre 375 nm et 450 nm et entre 520 nm et 540 nm, de préférence entre 260 nm et 270 nm, entre 400 nm et 410 nm ainsi qu'entre 530 nm et 535 nm.

8. Procédé selon l'une des revendications 1 à 7, **caractérisé en ce que**, dans la matière plastique, une fois que la matière plastique et l'au moins un additif sont identifiés, les matières plastiques identifiés, avec l'au moins un additif, sont séparés au moyen d'un dispositif de tri pour le recyclage.

9. Procédé selon l'une des revendications 1 à 8, **caractérisé en ce que**, dans un trajet de rayons de détection de la lumière réémise, une grille optique (21) est disposée et **en ce que**, au moyen de la lumière d'ordre zéro de la lumière diffractée par la grille optique (21), la constante de temps de disparition de la fluorescence est déterminée.

10. Procédé selon la revendication 5, **caractérisé en ce que** l'échantillon est irradié plusieurs fois successivement avec une lumière d'au moins une longueur d'onde et la lumière réémise correspondante est mesurée et analysée plusieurs fois afin de déterminer la constante de temps de disparition de la fluorescence, de préférence dans lequel les au moins deux périodes correspondent à des irradiations à des moments différents, plus particulièrement successives, de l'échantillon avec la lumière.

11. Procédé selon l'une des revendications 1 à 10, **caractérisé en ce que** la détection de la lumière réémise est déclenchée par l'irradiation de l'échantillon (3) avec une lumière (2).

12. Dispositif (1) pour l'exécution d'un procédé selon l'une des revendications 1 à 11, comprenant :

une source de lumière (2) pour l'irradiation d'au moins l'échantillon (3) de matière plastique pure et de son au moins un additif, sous la forme d'un retardateur de flamme et/ou d'une substance lipophile, avec une lumière d'au moins une longueur d'onde,

un détecteur (6) pour la détection d'au moins une partie de la lumière réémise par l'échantillon, comprenant la fluorescence propre de la matière plastique dans l'échantillon et

une unité d'analyse comprenant au moins un processeur pour l'analyse de la lumière détectée,

une unité d'identification pour l'identification de la matière plastique pure et d'au moins un de ses additifs à l'aide du résultat de l'analyse mis à dispositif par l'unité d'analyse, dans lequel

l'unité d'analyse est conçue pour déterminer une constante de temps de disparition de fluorescence de la fluorescence propre de la matière plastique dans l'échantillon à l'aide de la lumière détectée et l'unité d'identification est conçue pour identifier, à l'aide de l'au moins une constante de temps de disparition de fluorescence déterminée de la fluorescence propre de la matière plastique dans l'échantillon, la matière plastique pure et au moins un de ses additifs, sous la forme d'un retardateur de flamme et/ou d'une substance lipophile, dans lequel la source de lumière peut être une source de lumière à impulsions, de préférence un laser pulsé et/ou le détecteur peut être conçu de façon à être sensible à la phase et dans lequel le ou les additifs font diminuer la constante de temps de disparition de fluorescence de la fluorescence propre de la matière plastique dans l'échantillon par rapport à celle de la matière plastique pure.

13. Dispositif selon la revendication 12, **caractérisé en ce que** le dispositif comprend une grille optique dans un trajet de rayons de détection de la lumière réémise, dans lequel le détecteur (6) est disposé de sorte que, au moyen du détecteur, l'ordre zéro de la lumière diffractée par la grille optique (21) peut être détectée et, plus particulièrement, dans lequel un spectromètre est disposé, avec lequel les ordres plus élevés de la lumière diffractée par la grille optique (21) peuvent être détectés pour une analyse spectroscopique.

14. Dispositif selon l'une des revendications 12 à 13, **caractérisé en ce que** le dispositif comprend un dispositif de tri qui est conçu afin de séparer les matières plastique identifiées d'autres matières plastiques.

15. Utilisation d'une détermination d'une constante de temps de disparition de fluorescence exponentielle simple et/ou multi-exponentielle de la fluorescence propre d'une matière plastique dans un échantillon, comprenant la matière plastique et un ou plusieurs additifs, sous la forme d'un retardateur de flamme et/ou d'une substance lipophile, pour l'identification de la matière plastique et d'au moins un additif, sous la forme d'un retardateur de flamme et/ou d'une substance lipophile, dans l'échantillon, dans lequel le ou les additifs font diminuer la constante de temps de disparition de fluorescence de la fluorescence propre de la matière plastique dans l'échantillon par rapport à celle de la matière plastique pure.

Fig. 1

Fig. 2

Abbildung 0te-Ordnung

20

Eingangsstrahl auf Spalt

opt. Gitter

21

Lot Gitter

6

Lot Gitter

Sensor "Abklingzeit" (polychromatisch)

285nm

Sensor "Spektrum"

715nm

22

Fig. 3

EP 3 268 725 B1

Fluoreszenzabklingzeit Tau (ns)

Fig. 4

Fig. 5

EP 3 268 725 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012012772
- US 20050095715 A
- GB 2330409 A
- DE 4231477 A1
- US 5329127 A
- EP 0563998 A1
- US 2011232398 A1
- DE 4433937 A1
- TW I468653 B
- EP 1052499 A1
- US 2013270457 A1

**In der Beschreibung aufgeführte Nicht-Patentliteratur**

- **HEINZ LANGHALS et al.** High Performance Recycling of Polymers by Means of Their Fluorescence Lifetimes. *GREEN AND SUSTAINABLE CHEMISTRY,* August 2014, vol. 04 (03